(19) Europäisches Patentamt
European Patent Office
Office européen des brevets

(11) EP 3 219 753 B1

(12) **EUROPEAN PATENT SPECIFICATION**

(45) Date of publication and mention of the grant of the patent:
**01.04.2020 Bulletin 2020/14**

(21) Application number: **15859624.7**

(22) Date of filing: **11.11.2015**

(51) Int Cl.:
*C08L 33/10* (2006.01) *C08J 5/18* (2006.01)
*C08L 69/00* (2006.01) *C08L 71/10* (2006.01)

(86) International application number:
**PCT/JP2015/081739**

(87) International publication number:
**WO 2016/076357 (19.05.2016 Gazette 2016/20)**

(54) **METHACRYLIC RESIN COMPOSITION AND MOLDED BODY**

METHACRYLHARZZUSAMMENSETZUNG UND FORMKÖRPER

COMPOSITION DE RÉSINE MÉTHACRYLIQUE ET CORPS MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.11.2014 JP 2014231756**

(43) Date of publication of application:
**20.09.2017 Bulletin 2017/38**

(73) Proprietor: **Kuraray Co., Ltd.**
**Kurashiki-shi, Okayama 710-0801 (JP)**

(72) Inventors:
- **HIRAOKA, Nobutaka**
  **Tainai-shi**
  **Niigata 959-2691 (JP)**
- **ABE, Toru**
  **Tainai-shi**
  **Niigata 959-2691 (JP)**
- **NAKAHARA, Atsuhiro**
  **Tainai-shi**
  **Niigata 959-2691 (JP)**
- **TAKASUKA, Yuuki**
  **Tainai-shi**
  **Niigata 959-2691 (JP)**
- **OGUSHI, Masayasu**
  **Tainai-shi**
  **Niigata 959-2691 (JP)**

(74) Representative: **Müller-Boré & Partner**
**Patentanwälte PartG mbB**
**Friedenheimer Brücke 21**
**80639 München (DE)**

(56) References cited:
**EP-A1- 3 127 681** **WO-A1-2015/162926**
**JP-A- 2001 026 706** **JP-A- 2011 509 435**
**US-A- 5 656 704** **US-A1- 2009 012 267**
**US-A1- 2009 197 020**

- **KODAMA, M. ET AL.: 'Effect of the stereoregularity of poly(methyl methacrylate) oninteraction and boundary phase structure between poly(methylmethacrylate)/poly (hydroxypropyl ether of bisphenol A) blend andpolyamide substrate' POLYMER JOURNAL vol. 22, no. 1, 01 January 1990, pages 21 - 30, XP003034342**
- **ALBERDI, M. ET AL.: 'Influence of the blending method and poly(methyl methacrylate) tacticityin its miscibility with poly(hydroxy ether of bisphenol A, phenoxy' POLYMER JOURNAL vol. 26, no. 9, 01 October 1994, pages 1037 - 1046, XP003034343**
- **HSU, W.P. ET AL.: 'MISCIBLE BLENDS OF STEREOREGULAR POLY(METHYL METHACRYLATE) AND POLY(HYDROXY ETHER OF BISPHENOL A )' POLYMER JOURNAL vol. 32, no. 2, 01 January 2000, pages 127 - 132, XP055441141**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 219 753 B1

## Description

### Technical Field

The present invention according to claims 1 to 5 relates to a methacrylate resin composition. More specifically, the present invention relates to a methacrylate resin composition containing methacrylate resin and phenoxy resin. Further, the present invention according to claim 6 relates to a molded article consisting of the methacrylate resin composition.

### Background Art

Various types of resin films are used for liquid crystal display devices. For one of such films, namely, a polarizer protective film, triacetylcellulose is mainly used. Because a film made of triacetylcellulose has high moisture permeability, the quality of the polarizer tends to decrease as the film gets thinner. To achieve a thinner liquid crystal display device, improvement of the polarizer protective film is an issue to be addressed.

Use of a methacrylate resin as a new material of the polarizer protective film is under review. It is known that toughness is enhanced by stretching a film made of a methacrylate resin (see Patent Literature 1). However, stretching a typical methacrylate resin film results in an increase in a phase difference, which causes degradation of screen quality in an IPS liquid crystal display.

One known method to reduce a phase difference in methacrylate resin is using a composition of a methacrylate resin and a polycarbonate resin (Patent Literature 2). However, the composition of a methacrylate resin and a polycarbonate resin has a problem that necessary adhesive strength is not obtained when it is formed into a film.

Another method is adding a resin such as a phenoxy resin to a modified methacrylate resin, thereby obtaining a film with small phase differences (Patent Literature 3 to 5). However, because the modified methacrylate resin that is used in those methods is copolymerized with an aromatic vinyl monomer or an imide monomer in order to improve heat resistance, there is a problem that strength is low, and a film made of this material is subject to cracking

Patent Literature 6 to 11 also describe PMMA compositions for films.

### Citation List

### Patent Literature

PTL1: Japanese Examined Patent Publication No. S57-32942
PTL2: Japanese Unexamined Patent Application Publication No. 2014-051649
PTL3: International Patent Publication No. 2009/088240 (Japanese Patent No. 5220129)
PTL4: International Patent Publication No. 2009/088237 (Japanese Patent No. 5312479)
PTL5: International Patent Publication No. 2009/134097 (Japanese Patent No. 5335070)
PTL6: EP 3 127 681 A1
PTL7: US 2009/012267 A1
PTL8: US 2009/197020 A1
PTL9: US 5 656 704 A
PTL10: HSU, W.P. ET AL.: "MISCIBLE BLENDS OF STEREOREGULAR POLY(METHYL METHACRYLATE) AND POLY(HYDROXY ETHER OF BISPHENOL A)", POLYMER JOURNAL, vol. 32, no. 2, 1 January 2000 (2000-01-01), pages 127-132, XP055441141
PTL11:JP 2001 026706 A


### Summary of Invention

### Technical Problem

An object of the present invention is to provide a methacrylate resin composition having high transparency and high heat resistance, and capable of having small phase differences in the film thickness direction even when a film obtained therefrom is stretched.

**Solution to Problem**

As a result of intensive studies, the present invention according to claims 1 to 11 that includes the following aspects has been accomplished to solve the above problems.

[1] A methacrylate resin composition containing a methacrylate resin with a triad syndiotacticity (rr) of equal to or more than 58% and a phenoxy resin and a polycarbonate resin, wherein content of the phenoxy resin per 100 parts by mass of the methacrylate resin is in a range of 0.1 to 8 parts by mass, and total content of the methacrylate resin and the phenoxy resin is equal to or more than 80 mass%, wherein in the methacrylate resin, content of at least one structural units selected from a group consisting of lactone ring unit, maleic anhydride unit, glutaric acid anhydride unit, glutarimide unit, N-substituted maleimide unit, and tetrahydropyran ring structure unit is equal to or less than 0.1 mass%, wherein content of the polycarbonate resin per 100 parts by mass of the methacrylate resin is within a range of 0.1 to 8 parts by mass.

[3] The methacrylate resin composition according to [1], wherein the methacrylate resin has a weight-average molecular weight of 60000 to 200000, and content of structural units originating from methyl methacrylate is equal to or more than 92 mass%.

[4] The methacrylate resin composition according to any one of [1] to [3], containing a polycarbonate resin, wherein content of the polycarbonate resin per 100 parts by mass of the methacrylate resin is in a range of 0.1 to 8 parts by mass.

[5] The methacrylate resin composition according to any one of [1] to [4], wherein in the methacrylate resin, content of structural units originating from methyl methacrylate is equal to or more than 99 mass%.

[6] The methacrylate resin composition according to any one of [1] to [5], wherein a number-average molecular weight of the phenoxy resin is 10000 to 50000.

[7] The methacrylate resin composition according to any one of [1] to [6], wherein a weight-average molecular weight of the polycarbonate resin is 15000 to 28000.

[8] A molded article consisting of the methacrylate resin composition according to any one of [1] to [7].

[9] A film consisting of the methacrylate resin composition according to any one of [1] to [7].

[10] The film according to [9], wherein a thickness is 10 to 50 μm.

[11] The film according to [9] or [10], wherein the film is uniaxially stretched or biaxially stretched to 1.5 to 8 times in area ratio.

[12] A polarizer protective film or a phase difference film consisting of the film according to any one of [9] to [11].

[13] A polarizing plate wherein at least one of the polarizer protective film or the phase difference film according to [12] is laminated.

**Advantageous Effects of Invention**

A methacrylate resin composition according to the present invention has high transparency and high heat resistance. Further, when a film obtained therefrom is stretched, phase differences in the film thickness direction are small. Suitably, a film with a low heat shrinkage rate, high strength in spite of being thin and good adhesive properties is obtained from the methacrylate resin composition according to the present invention.

**Brief Description of Drawings**

Fig. 1 is a view showing an example of a polarizing plate according to a preferred embodiment of the present invention.

Fig. 2 is a view showing an example of a polarizing plate according to another preferred embodiment of the present invention.

**Description of Embodiments**

A methacrylate resin composition according to the present invention according to claims 1 to 5 contains methacrylate resin (A) and phenoxy resin (B) and a polycarbonate resin (C).

In the methacrylate resin (A) that is used in the present invention, the lower limit of triad syndiotacticity (rr) is 58%, preferably 59%, more preferably 60%, still more preferably 61%, and most preferably 62%. In the methacrylate resin (A), the upper limit of triad syndiotacticity (rr) is preferably 99%, more preferably 85%, further preferably 77%, still more preferably 72%, yet more preferably 66%, and most preferably 65% in terms of film formability and surface smoothness of a film to be obtained.

The triad syndiotacticity (rr) (which is referred to simply as "syndiotacticity (rr)" in some cases below) is a percentage where two chains (diad) in a chain of three consecutive structural units (triad) are both racemo (which is denoted as rr). Note that a chain of two adjacent structural units (diad) in a polymer molecule that consists of two identically oriented units is called meso, and the diad that consists of units oriented in opposition is called racemo, which are denoted as m and r, respectively. The syndiotacticity (rr) (%) of the methacrylate resin can be calculated from the formula: $(X/Y)\times 100$ by measuring $^1$H-NMR spectrum at 30°C in deuterated chloroform and measuring, from the spectrum, an area (X) of a region with 0.6 to 0.95 ppm and an area (Y) of a region with 0.6 to 1.35 ppm where tetramethylsilane (TMS) is 0 ppm.

The methacrylate resin (A) that is used in the present invention has a weight-average molecular weight (which is referred to as "Mw" in some cases below) of preferably 60000 to 200000, more preferably 70000 to 160000 and further preferably 80000 to 120000. With Mw of 80000 or more and syndiotacticity (rr) of 58% or more, a film to be obtained from the methacrylate resin (A) is high in strength, not subject to cracking, and easily stretchable. Thus, the film can be thinner. Further, with Mw of 200000 or less, the methacrylate resin (A) has enhanced moldability, which ensures higher surface smoothness of a film to be obtained.

In the methacrylate resin (A) that is used in the present invention, the ratio of Mw to a number-average molecular weight (which is referred to as "Mn" in some cases below) (Mw/Mn; this value is referred to as "molecular weight distribution" in some cases below) is preferably 1.2 to 2.0 and more preferably 1.3 to 1.7. With a molecular weight distribution of 1.2 or more, the fluidity of the methacrylate resin (A) increases and a film to be obtained is likely to be high in surface smoothness. Further, with a molecular weight distribution of 2.0 or less, a film to be obtained is likely to be high in shock resistance and toughness. Note that Mw and Mn are values obtained by converting the chromatogram measured by gel permeation chromatography (GPC) into a molecular weight of standard polystyrene.

The methacrylate resin (A) that is used in the present invention preferably has a melt flow rate of 0.1 to 5 g/10min, more preferably 0.5 to 4 g/10min, and most preferably 1.0 to 3 g/10min. The melt flow rate is measured at 230°C and 3.8kg load in compliance with JIS K7210.

In the methacrylate resin (A) that is used in the present invention, the content of structural units originating from methacrylate resin (A) with respect to the mass of methacrylate resin (A) is preferably 92 mass% or more, more preferably 95 mass% or more, further preferably 97 mass% or more, particularly preferably 99 mass% or more, and most preferably 100 mass%, in terms of heat resistance of a methacrylate resin composition to be obtained.

The methacrylate resin (A) that is used in the present invention may contain structural units other than structural units originating from methacrylate resin. For example, structural units originating from vinyl monomers containing one polymerizable carbon-carbon double bond in one molecule may be used, like alkylester methacrylate other than methyl methacrylate, such as ethyl methacrylate, cyclohexyl methacrylate, t-butyl methacrylate, isobornyl methacrylate, 8-tricyclo [5.2.1.0$^{2,6}$] decanyl methacrylate and 4-t-butylcyclohexyl methacrylate; alkylester acrylate such as methyl acrylate, ethyl acrylate, propyl acrylate, butyl acrylate and 2-ethylhexyl acrylate; aryl ester acrylate such as phenyl acrylate; cycloalkyl ester acrylate such as cyclohexyl acrylate and norbornenyl acrylate; aromatic vinyl such as styrene, $\alpha$-methylstyrene and p-methylstyrene; acrylamide; methacrylamide; acrylonitrile; and methacrylonitrile.

In the methacrylate resin (A) that is used in the present invention, the content of cyclic skeleton structural units contained in a main chain is preferably 0.1 mass% or less. To be specific, the content of at least one structural unit selected from a group consisting of a lactone ring unit, a maleic anhydride unit, a glutaric acid anhydride unit, a glutarimide unit, an N-substituted maleimide unit, and a tetrahydropyran ring structure unit is preferably 0.1 mass% or less. When the content of such a structure is more than 0.1 mass%, a molded article obtained from the methacrylate resin composition becomes brittle.

The glass transition temperature of the methacrylate resin (A) that is used in the present invention is preferably 120°C or higher, more preferably 122°C or higher, and further preferably 123°C or higher. The upper limit of the glass transition temperature of the methacrylate resin is 131°C in general. The glass transition temperature can be controlled by adjusting the molecular weight or the syndiotacticity (rr). When the glass transition temperature is within this above range, deformation such as heat shrinkage is not likely to occur in a film to be obtained.

A method of producing the methacrylate resin (A) is not particularly limited. For example, by using a known polymerization method such as radical polymerization or anion polymerization and adjusting the polymerization temperature, the polymerization time, the type and amount of a chain transfer agent, the type and amount of a polymerization initiator and the like, it is possible to produce the methacrylate resin having properties such as Mw and syndiotacticity (rr) which satisfy the range defined in this specification.

For example, in the case of radical polymerization, the polymerization temperature is preferably 80°C or lower, more preferably 70°C or lower, and most preferably 60°C or lower. By adjusting the temperature in this manner, the syndiotacticity (rr) can be high.

In the case of anion polymerization, it is preferred to use alkyllithium such as n-butyllithium, sec-butyllithium, isobutyllithium or tert-butyllithium as the polymerization initiator. Further, an organic aluminum compound preferably

coexists in terms of productivity. An example of organic aluminum is a compound represented by the formula:

$$AlR^1R^2R^3$$

(in the formula, $R^1$, $R^2$ and $R^3$ indicate an alkyl group which may have a substituent, a cycloalkyl group which may have a substituent, an aryl group which may have a substituent, an aralkyl group which may have a substituent, an alkoxyl group which may have a substituent, an aryloxy group which may have a substituent or an N, N-disubstituted amino group, independently of one another. $R^2$ and $R^3$ may be an arylenedioxy group which may have a substituent, in combination.) Specifically, isobutylbis(2,6-di-tert-butyl-4-methylphenoxy)aluminum, isobutylbis(2,6-di-tert-butylphenoxy)aluminum, isobutyl[2,2'-methylenebis(4-methyl-6-tert-butylphenoxy)aluminum or the like may be used. Further, in anion polymerization, ether, a nitrogen-containing compound or the like may coexist in order to control polymerization reaction.

Further, in the case of producing the methacrylate resin (A) by anion polymerization, the weight-average molecular weight can be adjusted by adding a polymerization terminator in the polymerization reaction process. The amount of polymerization terminator to be added is smaller than the amount of polymerization initiator; that is, to be specific, preferably 1 to 50 mol%, more preferably 2 to 20 mol%, and further preferably 5 to 10 mol% of the amount of polymerization initiator. The weight-average molecular weight can be adjusted also by additionally adding a polymerization initiator in the polymerization reaction process. The amount of additional polymerization initiator is preferably 1 to 50 mol%, more preferably 2 to 20 mol%, and most preferably 5 to 10 mol% of the amount of polymerization initiator first added.

As another method of producing the methacrylate resin (A), the methacrylate resin having properties such as the weight-average molecular weight and the syndiotacticity (rr) which satisfy the range defined in this specification, can be obtained by mixing a plurality of types of methacrylate resins having properties such as the weight-average molecular weight and the syndiotacticity (rr) of which any one thereof is outside the range defined in the present invention. Process management is easier in this method. The mixing of a plurality of types of methacrylate resins may be done by using a known technique, like a melt-kneading device such as, for example, a kneader-ruder, an extruder, a mixing roll or a Banbury mixer. The temperature during kneading can be adjusted appropriately according to the melting temperature of the methacrylate resin to be used, and it is 150°C to 300°C in general.

As another method of producing the methacrylate resin (A), the methacrylate resin having properties such as the weight-average molecular weight and the syndiotacticity (rr) which satisfy the range defined in this specification, can be obtained by the polymerization of monomers in the presence of methacrylate resin having properties any one of which is outside the range defined in the present invention. Such polymerization can be performed in the same manner as that of the above-described radical polymerization or anion polymerization. The production method that polymerizes monomers in the presence of methacrylate resin having properties any one of which is outside the range defined in the present invention is advantageous over the production method that mixes a plurality of types of methacrylate resin in that a heat history applied to the methacrylate resin (A) is shorter, and therefore pyrolysis of the methacrylate resin (A) is suppressed, and a film with less coloring and less foreign matter is likely to be obtained.

Out of the above-described methods of producing the methacrylate resin (A), in terms of easiness of production of the methacrylate resin (A) with high transparency, it is preferred to use a method that produces the methacrylate resin (A) having properties which satisfy the specified range by anion polymerization, it is more preferred to use a method that produces the methacrylate resin (A) having properties which satisfy the specified range by mixing a methacrylate resin produced by anion polymerization and a methacrylate resin produced by radial polymerization, it is even more preferred to use a method that produces the methacrylate resin (A) having properties which satisfy the specified range by mixing a methacrylate resin produced by anion polymerization and another methacrylate resin produced by anion polymerization, and it is most preferred to use a method that produces the methacrylate resin of having properties which satisfy the specified range according to the present invention by mixing a methacrylate resin produced by anion polymerization and a methacrylate resin produced by radial polymerization.

One embodiment where the methacrylate resin (A) is obtained by a method of mixing a methacrylate resin (I) and a methacrylate resin (II) is described hereinafter. Note that the following description describes the methacrylate resin (A) according to one embodiment of the present invention, and the present invention is not limited to this embodiment, and it can be achieved by other embodiments as a matter of course.

In the methacrylate resin (I), the triad syndiotacticity (rr) is preferably 65% or more, more preferably 70 to 90%, and most preferably 72 to 85%. With the triad syndiotacticity (rr) of 65% or more, the glass transition temperature of the methacrylate resin composition according to the present invention can be high, and a molded article with high surface hardness is likely to be obtained.

In the methacrylate resin (I), the polystyrene-converted weight-average molecular weight Mw1 that is calculated based on the chromatogram obtained by gel permeation chromatography is preferably 40000 to 150000, more preferably 40000 to 120000, and most preferably 50000 to 100000. With Mw1 of 40000 or more, the shock resistance and toughness of a molded article obtained from the methacrylate resin composition is likely to be high, and with Mw1 of 150000 or

less, the fluidity of the resin composition increases, and accordingly the moldability is likely to be improved.

In the methacrylate resin (I), the ratio Mw1/Mn1 of the weight-average molecular weight Mw1 to the polystyrene-converted number-average molecular weight Mn1 that is calculated based on the chromatogram obtained by gel permeation chromatography is preferably 1.01, more preferably 1.05 and most preferably 1.06 as the lower limit, and preferably 1.2, more preferably 1.15 and most preferably 1.13 as the upper limit. With use of the methacrylate resin (I) with the ratio Mw1/Mn1 within this range, a molded article with high mechanical strength is likely to be obtained. The values of Mw1 and Mn1 can be controlled by adjusting the type, the amount and the timing of addition of a polymerization initiator, a chain transfer agent and the like that are used when producing the methacrylate resin (I).

The glass transition temperature of the methacrylate resin (I) is preferably 125°C or higher, more preferably 128°C or higher, and most preferably 130°C or higher. The upper limit of the glass transition temperature of the methacrylate resin (I) is preferably 140°C. The glass transition temperature can be controlled by adjusting the molecular weight, the syndiotacticity (rr) or the like. As the glass transition temperature of the methacrylate resin (I) gets higher, the glass transition temperature of a methacrylate resin composition to be obtained gets higher, and a molded article consisting of the methacrylate resin composition gets less subject to deformation such as heat shrinkage.

In the methacrylate resin (II), the triad syndiotacticity (rr) is preferably 45 to 58%, and more preferably 49 to 56%. With the triad syndiotacticity (rr) of 45% or more, the glass transition temperature of the methacrylate resin composition according to the present invention is likely to be high, and with the triad syndiotacticity (rr) of 58% or less, the moldability of the methacrylate resin composition according to the present invention is likely to be improved.

In the methacrylate resin (II), the polystyrene-converted weight-average molecular weight Mw2 that is calculated based on the chromatogram obtained by gel permeation chromatography is preferably 40000 to 180000, more preferably 50000 to 150000, and most preferably 50000 to 120000. With Mw2 of 40000 or more, the shock resistance and toughness of a molded article obtained from the methacrylate resin composition is likely to be high, and with Mw1 of 180000 or less, the fluidity of the methacrylate resin composition increases, and therefore the moldability is likely to be improved.

In the methacrylate resin (II), the ratio Mw2/Mn2 of the weight-average molecular weight Mw2 to the polystyrene-converted number-average molecular weight Mn2 that is calculated based on the chromatogram obtained by gel permeation chromatography is preferably 1.7 to 2.6, more preferably 1.7 to 2.3 and most preferably 1.7 to 2.0. With use of the methacrylate resin (II) with the ratio Mw2/Mn2 within this range, a molded article with high mechanical strength is likely to be obtained. The values of Mw2 and Mn2 can be controlled by adjusting the type, the amount, and the timing of addition of a polymerization initiator, a chain transfer agent and the like that are used when producing the methacrylate resin (II).

The glass transition temperature of the methacrylate resin (II) is preferably 100°C or higher, more preferably 110°C or higher, further preferably 115°C or higher, and most preferably 117°C or higher. The upper limit of the glass transition temperature of the methacrylate resin (II) is preferably 122°C. The glass transition temperature can be controlled by adjusting the molecular weight, the syndiotacticity (rr) or the like. When the glass transition temperature of the methacrylate resin (II) is within this range, the heat resistance of the methacrylate resin composition is higher, and a molded article that is less subject to deformation such as heat shrinkage is likely to be obtained.

The above-described methacrylate resin (I) may be obtained by any production method. The methacrylate resin (I) is preferably produced by using anion polymerization and adjusting the polymerization temperature, the polymerization time, the type and amount of a chain transfer agent, the type and amount of a polymerization initiator and the like in terms of higher productivity, higher pyrolysis resistance, less foreign matters, less dimers or trimers of methacrylate ester, and better appearance of a molded article.

The above-described methacrylate resin (II) may be obtained by any production method. The methacrylate resin (II) is preferably produced by using radical polymerization and adjusting the polymerization temperature, the polymerization time, the type and amount of a chain transfer agent, the type and amount of a polymerization initiator and the like in terms of higher productivity. The radical polymerization is performed in the absence of a solvent or in a solvent, and it is preferably performed in the absence of solvent in order to obtain the methacrylate resin (II) with a low impurity concentration. The polymerization reaction is preferably carried out at a low dissolved oxygen level in order to suppress the occurrence of silver or coloring in a molded particle. Further, the polymerization reaction is preferably carried out under an inert gas atmosphere such as nitrogen gas.

In the methacrylate resin (I) and the methacrylate resin (II), independently of each other, the content of structural units originating from methacrylate ester is preferably 90 mass% or more, more preferably 95 mass% or more, further preferably 98 mass% or more, still more preferably 99 mass% or more, and most preferably 100 mass%.

In the present invention, the above-described phenoxy resin (B) is a high-molecular-weight thermoplastic epoxy resin, which indicates polyhydroxy polyether having a chain with a hydroxy group containing unit and an aromatic unit. To be specific, the above-described phenoxy resin (B) contains one or more types of units represented by the following formula (1) and also contains structural units originating from the unit represented by the following formula (1) by 50%mass or more.

The number-average molecular weight of the above-described phenoxy resin (B) is preferably 3000 to 2000000,

more preferably 5000 to 100000, and most preferably 10000 to 50000. When the number-average molecular weight is within this range, a methacrylate resin composition with high heat resistance and high strength can be obtained. The number of units represented by the following formula (1) to be contained in the above-described phenoxy resin (B) is preferably 10 to 1000, more preferably 15 to 500, and most preferably 30 to 300.

The glass transition temperature of the phenoxy resin (B) is preferably 80°C or higher, more preferably 90°C or higher, and most preferably 95°C or higher. When the glass transition temperature of the phenoxy resin (B) is low, the heat resistance of the methacrylate resin composition to be obtained becomes low. Although the upper limit of the glass transition temperature of the phenoxy resin (B) is not particularly specified, it is 150°C in general. When the glass transition temperature of the phenoxy resin (B) is too high, a molded article consisting of the methacrylate resin composition to be obtained becomes brittle.

It is preferred that the terminal structure of the phenoxy resin (B) does not contain an epoxy group. If the phenoxy resin (B) contains an epoxy group at the terminal, a film consisting of the methacrylate resin composition to be obtained is likely to have gel defects.

When two or more types of units represented by the following formula (1) are contained in the phenoxy resin (B), those units may be contained at random, alternately, or in a block.

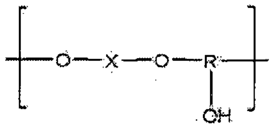

(1)

In the above formula (1), X is a divalent radical containing at least one benzene ring, and R is a straight-chain or branched-chain alkylene group with a carbon number of 1 to 6.

Specifically, in the formula (1), X is preferably a divalent radical originating from compounds as represented by the following formulas (2) to (4). Note that, although the positions of two substituents that form a divalent radical are not particularly limited as long as it is a feasible structure, a divalent radical formed by extracting two hydrogen atoms on a benzene ring in the following formulas (2) to (4) is preferred. Particularly, a divalent radical formed by extracting total two hydrogen atoms on different benzene rings in the following formulas (2) and (4) is preferred.

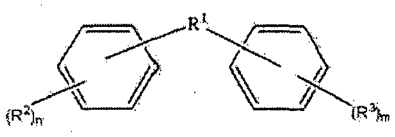

(2)

In the above formula (2), R1 indicates a straight-chain or branched-chain alkylene group with a carbon number of 1 to 6, a cycloalkylene group or a cycloalkylidene group with a carbon number of 3 to 20, or a naphthalene structure where an atom does not exist in R1 and direct bonding is made, or a biphenyl structure. Each of R2 and R3 is a hydrogen atom, a straight-chain or branched-chain alkyl group with a carbon number of 1 to 6, or a straight-chain or branched-chain alkenyl group with a carbon number of 2 to 6. Each of n and m is an integer of 1 to 4.

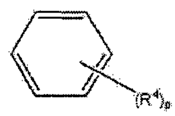

(3)

In the above formula (3), R4 is a hydrogen atom, a straight-chain or branched-chain alkyl group with a carbon number of 1 to 6 or a straight-chain or branched-chain alkenyl group with a carbon number of 2 to 6, and p is an integer of 1 to 4.

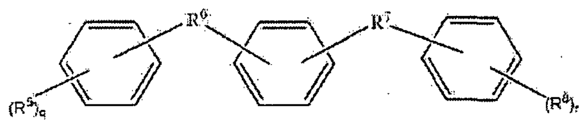

(4)

In the above formula (4), each of R6 and R7 indicates a straight-chain or branched-chain alkylene group with a carbon number of 1 to 6, a cycloalkylene group or a cycloalkylidene group with a carbon number of 3 to 20, or a naphthalene structure where an atom does not exist in R6, R7 and direct bonding is made, or a biphenyl structure. Each of R5 and R8 is a hydrogen atom, a straight-chain or branched-chain alkyl group with a carbon number of 1 to 6, or a straight-chain or branched-chain alkenyl group with a carbon number of 2 to 6. Each of q and r is an integer of 1 to 4.

Further, in the above formula (1), X may be a divalent radical originating from aromatic hydrocarbon with a tricyclic structure. Specific examples are a fluorine structure and a carbazole structure.

A specific example of a divalent radical originating from the compounds represented by the following formulas (2) to (4) is a divalent radical originating from divalent phenol derivative having the following structure, though not limited thereto. A divalent radical formed by extracting hydrogen atoms on a benzene ring in the following structure is preferred. Particularly, a divalent radical formed by extracting total two hydrogen atoms on different benzene rings is preferred.

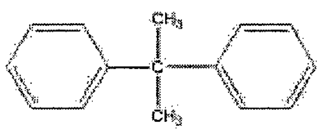

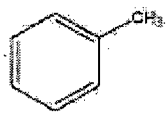

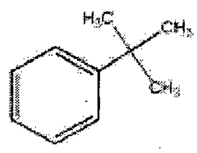

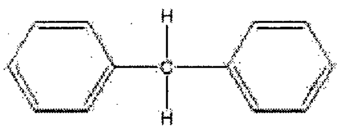

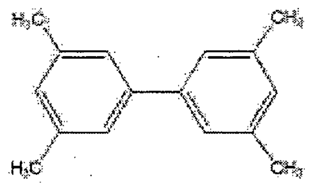

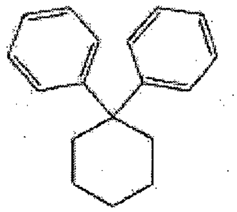

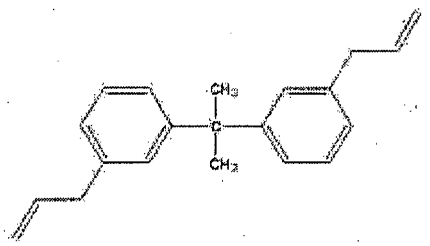

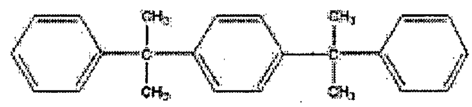

(Specific structure examples of the above (2) to (4))

The unit represented by the above formula (1) is preferably the unit represented by the following formula (6) in particular. Further, the phenoxy resin (B) preferably contains one or more types of units represented by the following formula (6) where the number of that unit is 10 to 1000 units.

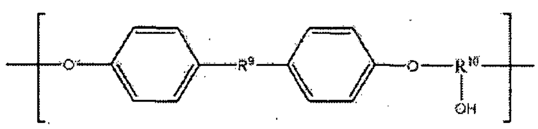

(6)

In the above formula (6), R9 indicates a straight-chain or branched-chain alkylene group with a carbon number of 1 to 6, a cycloalkylene group or a cycloalkylidene group with a carbon number of 3 to 20, or a naphthalene structure where an atom does not exist in R1 and direct bonding is made, or a biphenyl structure, and R10 is a straight-chain or

branched-chain alkylene group with a carbon number of 1 to 6.

The unit represented by the above formula (6) is preferably the unit represented by the following formula (7) in particular.

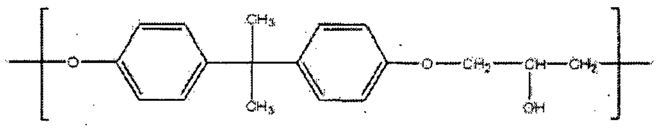

(7)

As the phenoxy resin (B), YP-50, YP -50S manufactured by Nippon Steel & Sumikin Chemical Co., Ltd., jER series manufactured by Mitsubishi Chemical Corporation, PKFE, PKHJ which are phenoxy resins manufactured by Inchem Co., Ltd. or the like may be used.

The phenoxy resin (B) according to the present invention can be obtained by condensation reaction of a divalent phenol compound and epihalohydrin or polyaddition reaction of a divalent phenol compound and a bifunctional epoxy resin, and it can be obtained by a known method in a solvent or in the absence of solvent.

The content of the phenoxy resin (B) per 100 parts by mass of the methacrylate resin (A) contained in the methacrylate resin composition according to the present invention is 0.1 to 8 parts by mass, and preferably 1 to 6 parts by mass. When the content of the phenoxy resin (B) is less than 0.1 parts by mass, the pyrolysis resistance under the air atmosphere is low, and the adhesive properties of a film to be obtained are degraded. When the content of the phenoxy resin (B) is more than 8 parts by mass, the heat resistance decreases and a phase difference increases.

When the content of the phenoxy resin is within this range, it is possible to obtain the methacrylate resin composition with good adhesive properties, high pyrolysis resistance, and enabling reduction of phase differences in the film thickness direction when a film obtained therefrom is stretched. This methacrylate resin composition is less subject to pyrolysis during molding, it is possible to suppress fouling of a molding device such as a mold during melt molding. For example, it is possible to suppress roll fouling when producing a film by extrusion molding.

The methacrylate resin composition according to the present invention contains a combination of the methacrylate resin (A) and the phenoxy resin (B) by 80 mass% or more, preferably 90 to 100 mass%, more preferably 94 to 100 mass%, and further preferably 96 to 100 mass%.

The methacrylate resin composition according to the present invention may contain fillers according to need within a range which does not impair the effects of the present invention. Examples of filters include calcium carbonate, talc, carbon black, titanium oxide, silica, clay, barium sulfate, magnesium carbonate and the like. The amount of fillers to be contained in the methacrylate resin composition according to the present invention is preferably 3 mass% or less and more preferably 1.5 mass% or less.

The methacrylate resin composition according to the present invention may contain other polymers within a range which does not impair the effects of the present invention. Examples of other polymers include polyolefin resin such as polyethylene, polypropylene, polybutene-1, poly-4-methylpentene-1 and polynorbornene; ethylene ionomer; styrene resin such as polystyrene, styrene-maleic anhydride copolymer, high impact polystyrene, AS resin, ABS resin, AES resin, AAS resin, ACS resin and MBS resin; methyl methacrylate polymer, methyl methacrylate - styrene copolymer; polyester resin such as polyethylene terephthalate and polybutylene terephthalate; polyamide such as nylon 6, nylon 66 and polyamide elastomer; polyvinyl chloride, polyvinylidene chloride, polyvinyl alcohol, ethylene - vinyl alcohol copolymer, polyacetal, polyvinylidene fluoride, polyurethane, modified polyphenylene ether, polyphenylene sulfide, silicone-modified resin; acrylic core-shell rubber, acrylic block copolymer, silicone rubber; styrene-based thermoplastic elastomer such as SEPS, SEBS and SIS; olefin-based rubber such as IR, EPR and EPDM and the like. Among those polymers to be contained, a polycarbonate resin is preferred in terms of transparency and heat resistance. The content of those polymers in the methacrylate resin composition is preferably 20 mass% or less and more preferably 10 mass% or less.

The polycarbonate resin (C) that is used in the present invention is not particularly limited. As the polycarbonate resin (C), a polymer that is produced by the reaction of a multifunctional hydroxy compound and a carbonic acid ester-forming compound may be used. In the present invention, an aromatic polycarbonate resin is preferred for use in terms of good compatibility with the methacrylate resin (A) and high transparency of a film to be obtained.

In the polycarbonate resin (C), the MVR value at 300°C and 1.2Kg is preferably 1 to 100000 $cm^3$/10min, more preferably 80 to 400 $cm^3$/10 min, further preferably 100 to 300 $cm^3$/10 min, still further preferably 130 to 250 $cm^3$/10 min, and most preferably 150 to 230 $cm^3$/10min in terms of good compatibility with the methacrylate resin (A) and high transparency and surface smoothness of a film to be obtained.

Further, in the polycarbonate resin (C) that is used in the present invention, the weight-average molecular weight that is obtained by converting the chromatogram measured by gel permeation chromatography (GPC) into molecular weight of standard polystyrene is preferably 5000 to 75000, more preferably 13000 to 33000, further preferably

14000 to 30000, still further preferably 15000 to 28000, and most preferably 18000 to 27000 in terms of good compatibility with the methacrylate resin (A) and high transparency and surface smoothness of a film to be obtained. Note that the control of the MVR value and the weight-average molecular weight of the polycarbonate resin (C) can be made by adjusting the amount of a terminator or a branching agent.

The glass transition temperature of the polycarbonate resin (C) that is used in the present invention is preferably 130°C or higher, more preferably 135°C or higher, and further preferably 140°C or higher. The upper limit of the glass transition temperature of the polycarbonate resin is 180°C in general. The glass transition temperature is a midpoint glass transition temperature that is measured by JIS K7121 (with a rate of temperature increase of 20°C/min).

A method for producing the polycarbonate resin (C) is not particularly limited. For example, a known method such as the Phosgene method (interfacial polymerization method) or the melt polymerization method (ester exchange method) may be used. Further, an aromatic polycarbonate resin that is suitably used in the present invention may be made by performing processing for adjusting the number of terminal hydroxy groups on a polycarbonate resin material produced by the melt polymerization method.

Further, the polycarbonate resin can be obtained from Sumika Styron Polycarbonate Limited, Teijin Limited, Mitsubishi Engineering-Plastics Corporation, Bayer Yakuhin, Ltd, Saudi Basic Industries Corporation (SABIC) and the like.

In the methacrylate resin composition according to claim 1 of the present invention, the content of the above-described polycarbonate resin per 100 parts by mass of the methacrylate resin (A) is 0.1 to 8 parts by mass, and preferably 0.5 to 5 parts by mass. In this range, the methacrylate resin (A), the phenoxy resin (B) and the polycarbonate resin (C) are completely compatible, and a film with high transparency and high surface smoothness can be obtained. Further, in this range, phase difference of a stretched film to be obtained can be small.

The methacrylate resin composition according to the present invention may contain additives such as antioxidant, thermal degradation inhibitor, ultraviolet absorber, light stabilizer, lubricant, release agent, polymeric processing aid, antistatic agent, flame retardant, staining pigment, light diffusing agent, organic pigment, matting agent, shock resistance modifier and phosphor.

The antioxidant has the effect of preventing oxidation degradation of a resin in the presence of oxygen. For example, phosphorus-based antioxidant, hindered phenol-based antioxidant, thioether-based antioxidant or like can be used. Among those, use of phosphorus-based antioxidant and hindered phenol-based antioxidant is preferred, and a combined use of phosphorus-based antioxidant and hindered phenol-based antioxidant is further preferred in terms of the effect of preventing degradation of optical properties due to coloring.

In the case of using phosphorus-based antioxidant and hindered phenol-based antioxidant in combination, the mass ratio of phosphorus-based antioxidant and hindered phenol-based antioxidant is preferably 0.2 /1 to 2/1 and more preferably 0.5/1 to 1/1.

As the phosphorus-based antioxidant, 2,2-methylene bis(4,6-di-t-butylphenyl)octyl phosphite (trade name: ADK STAB HP-10, manufactured by ADEKA Corporation), tris(2,4-di-tert-butylphenyl)phosphite (trade name: IRGAFOS168, manufactured by BASF Corporation), 3,9-bis(2,6-di-t- butyl-4-methylphenoxy)-2,4,8,10-tetoraokisa 3,9-diphosphaspiro [5.5] undecane (trade name: ADK STAB PEP-36, manufactured by ADEKA Co., Ltd.) are preferred.

As the hindered phenol-based antioxidant, pentaerythrityl-tetrakis[3-(3,5-di-tert-butyl-4-hydroxyphenyl) propionate] (trade name: IRGANOX1010, manufactured by BASF Corporation), octadecyl-3-(3,5-di-tert-butyl-4-hydroxyphenyl) propionate (trade name: IRGANOX1076, manufactured by BASF Corporation) are preferred.

The heat degradation inhibitor is an agent that prevents heat degradation of a resin by trapping polymer radicals generated when exposed to high heat substantially in the absence of oxygen.

As the heat degradation inhibitor, 2-t-butyl-6-(3'-tert-butyl-5'-methyl-hydroxybenzyl)-4-methyl-phenyl acrylate (trade name: Sumilizer GM, manufactured by Sumitomo Chemical Co., Ltd.), 2,4-di-t-amyl-6-(3',5'-di-tert-amyl-2'-hydroxy-$\alpha$-methyl benzyl) phenyl acrylate (trade name: Sumilizer GS, manufactured by Sumitomo Chemical Co., Ltd.) are preferred.

The ultraviolet absorber is a compound that has the ability to absorb ultraviolet radiation, and it has the function of mainly converting light energy into heat energy.

As the ultraviolet absorber, benzophenones, benzotriazoles, triazines, benzoates, salicylates, cyanoacrylates, anilide oxalate, malonic acid esters, formamidines and the like are preferred. Among those agents, benzotriazoles, triazines or ultraviolet absorbers where the maximum value $\varepsilon_{max}$ of the molar absorbance coefficient at a wavelength of 380 to 450nm is equal to or less than $100 dm^3 \cdot mol^{-1} cm^{-1}$ is preferred.

The content of the ultraviolet absorber is preferably 0.01 to 10 mass%, more preferably 0. 1 to 5 mass%, and further preferably 0.2 to 2 mass%, though it depends on the molar absorbance coefficient of the ultraviolet absorber or a wavelength to be absorbed. When the content is high, while degradation can be suppressed for an extended period, bleed out during molding or usage occurs. When the content is too low, the desired ultraviolet absorption effect is not achieved.

Because benzotriazoles have high effect of suppressing degradation of optical properties such as coloring by

ultraviolet radiation, it is preferred for use as the ultraviolet absorber that is used when a film according to the present invention is used in an optical application. As benzotriazoles, 2-(2H-benzotriazol-2-yl)-4-(1,1,3,3-tetramethyl butyl) phenol (trade name: TINUVIN329, manufactured by BASF Corporation), and 2-(2H-benzotriazol-2-yl) -4,6-bis(1-methyl-1-phenylethyl) phenol (trade name: TINUVIN234, manufactured by BASF Corporation), 2,2'- methylenebis [6-(2H-benzotriazol-2-yl)-4-t-octylphenol] (LA-31, manufactured by ADEKA Co., Ltd.), 2- (5-octylthio -2H- benzotriazol-2-yl) -6-tert-butyl-4-methylphenol and the like are preferred.

Further, the ultraviolet absorber where the maximum value $\varepsilon_{max}$ of the molar absorbance coefficient at a wavelength of 380 to 450nm is equal to or less than $1200dm^3 \cdot mol^{-1}cm^{-1}$ can suppress discoloration of a film to be obtained. An example of such an ultraviolet absorber is 2-ethyl-2'-ethoxy-oxalanilide (trade name: Sandeyuboa VSU, manufactured by Clariant Japan KK).

Among those ultraviolet absorbers, benzotriazoles are preferably used in terms of suppressing degradation of a resin due to ultraviolet radiation.

Further, when it is desired to particularly efficiently absorb light with a wavelength of 380 to 400nm, it is preferred to use, as the ultraviolet absorber, metal complexes with heterocyclic ligands (for example, a compound with the structure represented by the formula (8)) which are disclosed in International Publication Numbers WO2011/089794A1 and WO2012/124395A1, Japanese Unexamined Patent Application Publications Nos. 2012-012476, 2013-023461, 2013-112790, 2013-194037, 2014-62228, 2014-88542, 2014-88543 and the like.

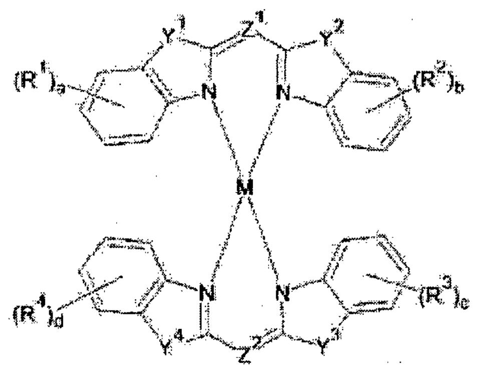

(8)

[In the above formula (8), M is a metal atom.

Each of $Y^1$, $Y^2$, $Y^3$ and $Y^4$ is a divalent radical other than a carbon atom (oxygen atom, sulfur atom, NH, $NR^5$ etc). $R^5$ is a substituent such as an alkyl group, an aryl group, a heteroaryl group, heteroaralkyl group or an aralkyl group. The substituent may further have a substituent in the substituent.

Each of Z1 and Z2 is a trivalence (nitrogen atom, CH, CR6 etc.). R6 is substituent such as an alkyl group, an aryl group, a heteroaryl group, heteroaralkyl group or an aralkyl group. The substituent may further have a substituent in the substituent.

Each of $R^1$, $R^2$, $R^3$ and $R^4$ is the substituent of a hydrogen atom, an alkyl group, a hydroxyl group, a carboxyl group, an alkoxyl group, a halogeno group, an alkylsulfonyl group, a morpholino sulfonyl group, piperidino sulfonyl group, thiomorpholino sulfonyl group, a piperazino sulfonyl group or the like. The substituent may further have a substituent in the substituent. a, b, c and d indicate the values of $R^1$, $R^2$, $R^3$ and $R^4$, respectively, each of which is an integer of 1 to 4.]

Examples of the heterocyclic ligands are 2,2'-imino bis benzothiazole, 2-(2-benzothiazolyl amino) benzoxazole, 2-(2-benzothiazolyl amino) benzimidazole, and (2-benzothiazolyl) (2-benzimidazolyl) methane, bis(2-benzoxazolyl) methane, bis(2-benzothiazolyl) methane, bis[2-(N- substituted) benzimidazolyl] methane and the like and their derivatives. As the central metal of such metal complexes, copper, nickel, cobalt and zinc are preferred for use. Further, in order to use these metal complexes as the ultraviolet absorber, it is preferred to disperse a metal complex in a medium such as a low molecular compound or a polymer. The additive amount of the metal complex is preferably 0.01 to 5 parts by mass and more preferably 0.1 to 2 parts by mass per 100 parts by mass of the film according to the present invention. Because the metal complex has a large molar absorbance coefficient at a wavelength of 380 to 400nm, the amount to be added to obtain sufficient ultraviolet absorbing effects is small. With a small additive amount, degradation of the appearance of a molded article due to bleed-out or the like can be suppressed. Further, because the metal complex has a high heat resistance, it is less subject to degradation or decomposition during molding. Further, because the metal complex has a high light resistance, it is possible to maintain the ultraviolet absorbing capability for a long time.

When it is desired to efficiently absorb light with a short wavelength of equal to or less than 380nm, triazines are suitably used as the ultraviolet absorber. Examples of such an ultraviolet absorber are 2,4,6-tris (2-hydroxy-4-hexyloxy-3-methylphenyl) -1,3,5-triazine (LA-F70, manufactured by ADEKA Corporation) or its analog hydroxyphenyl

triazine UV absorber (TINUVIN477, TINUVIN460, TINUVI N479, manufactured by BASF Corporation), 2,4-diphenyl-6-(2-hydroxy-4-hexyloxyphenyl) -1,3,5-triazine and the like.

The maximum value $\varepsilon_{max}$ of the molar absorbance coefficient of the ultraviolet absorber is measured as follows. A 10.00mg of ultraviolet absorber is added to 1 L of cyclohexane to dissolve so that nothing remains undissolved by visual observation. This solution is injected into a quartz glass cell of 1cm×1cm×3cm, and the absorbance at a wavelength of 380 to 450 nm is measured using U-3410 spectrophotometer manufactured by Hitachi, Ltd. From the molecular weight of the ultraviolet absorber (Muv) and the maximum value of absorbance measured ($A_{max}$), the maximum value $\varepsilon_{max}$ of the molar absorbance coefficient is calculated by the following equation.

$$\varepsilon_{max}=[A_{max}/(10\times10^{-3})]\times M_{UV}$$

The light stabilizer is a compound that has the function of trapping radicals generated mainly by oxidation with light. Examples of suitable light stabilizers are hindered amines such as a compound having a 2,2,6,6-tetraalkyl piperidine skeleton.

Examples of the lubricant are stearic acid, behenic acid, stearamide acid, methylene bis-stearamide, hydroxystearic acid triglyceride, paraffin wax, ketone wax, octyl alcohol, hydrogenated oil and the like.

The release agent is a compound that has the function of facilitating release of a molded article from a mold. Examples of the release agent are higher alcohols such as cetyl alcohol and stearyl alcohol; glycerin higher fatty acid esters such as monoglyceride stearate and diglyceride stearate. In the present invention, it is preferred to use, as a release agent, higher alcohol and glycerin fatty acid monoester in combination. In the case of making a combined use of higher alcohol and glycerin fatty acid monoester, the mass ratio of higher alcohol and glycerin fatty acid monoester is preferably in the range of 2.5/1 to 3.5/1 and more preferably 2.8/1 to 3.2/1.

The polymeric processing aid is, in general, polymer particles with a particle size of 0.05 to 0.5μm, which can be prepared by emulsion polymerization. The polymer particles may be single-layer particles composed of a polymer with a single composition ratio and a single limiting viscosity, or may be a multilayer particles composed of two or more types of polymers with different composition ratios or limiting viscosities. Particularly, two-layer particles composed of an inner polymer layer with a low limiting viscosity and an outer polymer layer with a high limiting viscosity of 5 dl/g or more are preferred for use. The polymeric processing aid preferably has a limiting viscosity of 3 to 6 dl/g.

As the shock resistance modifier, use of a core-shell modifier containing acrylic rubber or diene rubber as a core layer component, a modifier containing a plurality of rubber particles, an acrylic block copolymer or the like is preferred.

As the organic pigment, use of a compound that has the function of transforming ultraviolet light that is known to be harmful to a resin into visible light is preferred.

As the light diffusing agent and the matting agent, use of glass particles, polysiloxane crosslinked fine particles, crosslinked polymer particles, talc, calcium carbonate, barium sulfate or the like is preferred.

As the phosphor, use of fluorescent pigment, fluorescent dye, fluorescent white dye, fluorescent brightening agent, fluorescent bleach or the like is preferred.

One type of additives may be used alone, or two or more types of additives may be used in combination. Further, those additives may be added to a polymerization solution when producing the methacrylate resin (A), the phenoxy resin (B), the polycarbonate resin (C) and the like, may be added to the methacrylate resin (A), the phenoxy resin (B) and the polycarbonate resin (C) that have been produced, or may be added when preparing the methacrylate resin composition. The total amount of additives to be contained in the methacrylate resin composition according to the present invention is preferably 7 mass% or less, more preferably 5 mass% or less, and further preferably 4 mass% or less with respect to the methacrylate resin (A) in terms of suppressing degradation of the appearance of a film to be obtained.

A method of preparing the methacrylate resin composition according to the present invention is not particularly limited. One example is polymerization of a monomer mixture containing methyl methacrylate in the presence of the phenoxy resin (B) to generate the methacrylate resin (A), and another example is melt-kneading of the methacrylate resin (A) and the phenoxy resin (B). Among those methods, melt-kneading can be done by a simple process, which is preferable. In melt-kneading, another polymer or additives may be mixed according to need, the methacrylate resin (A) may be mixed with another polymer or additives and then mixed with the phenoxy resin (B), or the phenoxy resin (B) may be mixed with another polymer or additives and then mixed with the methacrylate resin (A), or another method may performed. The kneading can be performed using a known mixing device or a kneading device such as a kneader-ruder, a single screw or twin screw extruder, a mixing roll or a Banbury mixer. A twin screw extruder is particularly preferable among those devices. The temperature during mixing and kneading can be adjusted appropriately according to the melting temperature of the methacrylate resin (A) and the phenoxy resin (B) to be used, and it is preferably in the range of 110°C to 300°C.

The methacrylate resin composition according to the present invention contains the methacrylate resin (A) preferably by 73 to 99 mass%, more preferably by 80 to 97 mass%, and further preferably by 85 to 95 mass% for high transparency, high heat resistance and smaller phase differences in the thickness direction when it is formed into a film.

Further, the methacrylate resin composition according to the present invention contains the phenoxy resin (B) preferably by 0.1 to 8 mass% and more preferably by 1 to 6 mass% for smaller phase differences in the thickness direction when it is formed into a film.

Furthermore, in the case where the methacrylate resin composition according to the present invention contains the polycarbonate resin (C), it contains the polycarbonate resin (C) preferably by 0.1 to 8 mass% and more preferably by 0.5 to 5 mass% for smaller phase differences in the thickness direction of a film to be obtained.

The glass transition temperature of the methacrylate resin composition according to the present invention is preferably 120°C or higher, more preferably 123°C or higher, and further preferably 124°C or higher. Although the upper limit of the glass transition temperature of the methacrylate resin composition is not particularly limited, it is preferably 130°C.

The value of Mw that is determined by measuring the methacrylate resin composition according to the present invention by GPC is preferably 70000 to 200000, more preferably 72000 to 160000, and further preferably 75000 to 120000. The molecular weight distribution that is determined by measuring the methacrylate resin composition by GPC is preferably 1.2 to 2.5 and more preferably 1.3 to 2.0. When Mw and the molecular weight distribution are in this range, moldability of the methacrylate resin composition is good, and a molded article with high shock resistance and high toughness is likely to be obtained.

A melt flow rate that is determined by measuring the methacrylate resin composition according to the present invention at 230°C and 3.8kg load is preferably 0.1 to 6 g/10min, more preferably 0.5 to 5 g/ 10min, and most preferably 1.0 to 3 g/10min.

In the methacrylate resin composition according to the present invention, a haze with a thickness of 3.2mm is preferably 3.0% or less, more preferably 2.0% or less, and further preferably 1.5% or less.

In the methacrylate resin composition according to the present invention, a thermogravimetric reduction rate when it is heated to 290°C and left for 30 minutes under the air atmosphere is preferably 30% or less, more preferably 20% or less, and further preferably 15% or less.

The methacrylate resin composition according to the present invention may be in the form of pellets or the like in order to enhance the convenience for storage, carriage or molding.

The methacrylate resin composition according to the present invention can be formed into a molded article by a known molding method. Examples of molding method are melt molding such as T-die (lamination, coextrusion etc.), inflation (coextrusion etc.), compression molding, blow molding, calendar molding, vacuum molding, injection molding (insert molding, two-color molding, press molding, core-back molding, sandwich molding etc.), solution casting and the like.

A film according to the present invention, which is one form of a molded article, is not particularly limited by a process of production. The film according to the present invention can be obtained by forming the methacrylate resin composition into a film by a known method such as solution casting, melt-casting, extrusion molding, inflation molding or blow molding. Among those methods, extrusion molding is preferred for use. With the extrusion molding method, it is possible to obtain a film with high transparency, enhanced toughness, good handling properties, and appropriate balance among toughness, surface hardness and stiffness. The temperature of the methacrylate resin composition that is extruded from an extruder is preferably set to 160°C to 270°C and more preferably to 220°C to 260°C.

Among the extrusion molding methods, it is preferred to use a method that extrudes the methacrylate resin composition in a molten state from a T-die and places it between two or more mirror-finished rolls or mirror-finished belts for molding in order to obtain a film with high surface smoothness, high specular gloss and low haze. The mirror-finished rolls or mirror-finished belts are preferably made of metal. A linear pressure between a pair of mirror-finished rolls and mirror-finished belts is preferably 2 N/mm or higher, more preferably 10 N/mm or higher, and further preferably 30 N/mm or higher.

Further, it is preferred that the mirror-finished rolls and mirror-finished belts both have a surface temperature of 130°C or less. Further, it is preferred that at least one of a pair of mirror-finished rolls or mirror-finished belts has a surface temperature of 60°C or more. When the surface temperature is set to this range, it is possible to cool down the methacrylate resin composition that is extruded from an extruder at a higher rate than natural cooling, and a film with high surface smoothness and low haze is likely to be produced.

The film according to the present invention may undergo stretching. By the stretching, the mechanical strength is enhanced, and a film that is less subject to cracking can be obtained. A method for stretching is not particularly limited, and uniaxial stretching, simultaneous biaxial stretching, sequential biaxial stretching, tubular stretching or the like may be used. The temperature during stretching is preferably 100°C to 200°C and more preferably 120°C to 160°C for uniform stretching and higher strength of the film. The stretching is performed at a rate of 100 to 5000 %/min based on the length. By performing heat fixation after the stretching, it is possible to obtain a film with less heat shrinkage.

Although the thickness of the film according to the present invention is not particularly limited, the thickness is preferably 1 to 300 μm, more preferably 10 to 50 μm, and further preferably 15 to 40 μm when it is used as an optical film.

In the film according to the present invention, a haze at a thickness of 40 μm is preferably 0.2% or less and more preferably 0.1% or less. This enhances surface gloss and transparency. Further, this enhances the use efficiency of a light source in optics applications such as a liquid crystal protection film or a light guide film. Furthermore, this enhances the shaping accuracy in surface shaping.

In the film according to the present invention, a phase difference in the in-plane direction Re for light with a wavelength of 590 nm when the film thickness is 40 μm is preferably 15 nm or less, more preferably 10 nm or less, further preferably 5 nm or less, particularly preferably 3 nm or less, and most preferably 1 nm or less.

In the film according to the present invention, a phase difference in the thickness direction Rth for light with a wavelength of 590 nm when the film thickness is 40 μm is preferably between -5 nm and 5 nm, more preferably between -4 nm and 4 nm, further preferably -3 nm and 3 nm, particularly preferably -2 nm and 2 nm, and most preferably -1 nm and 1 nm.

When a phase difference in the in-plane direction and a phase difference in the thickness direction are within this range, phase differences are small, and the effects of phase differences on the display properties of an image display device can be significantly reduced. To be specific, nonuniform interference and 3D image distortion when it is used for a liquid crystal display device for 3D display are significantly improved.

Note that the phase difference in the in-plane direction Re and the phase difference in the thickness direction Rth are values defined by the following equations:

$$Re=(nx-ny)\times d$$

$$Rth=((nx+ny)/2-nz)\times d$$

where nx is the refractive index of the film in the slow axis direction, ny is the refractive index of the film in the fast axis direction, nz is the refractive index of the film in the film thickness direction, and d(nm) is the thickness of the film. The slow axis is a direction in which the in-plane refractive index of the film reaches its maximum, and the fast axis is a direction perpendicular to the slow axis in-plane.

A functional layer may be placed on a surface of a film, which is one form of a molded article according to the present invention. Examples of the functional layer are a hard coat layer, an anti-glare layer, an antireflection layer, a sticking prevention layer, a diffusion layer, an anti-glare layer, an antistatic layer, an antifouling layer, a slipping layer such as microparticulates and the like. The functional layer may be placed only on one side or on both sides.

Because the film according to the present invention has high transparency, high heat resistance, high pyrolysis resistance under the air atmosphere, small phase differences and small thickness, it is suitable for use as a polarizer protective film, a phase difference film, a liquid crystal protection plate, a surface material of a portable information terminal, a display window protective film of a portable information terminal, a light guide film, a transparent conductive film having a surface coated with silver nanowires or carbon nanotubes, a front plate of various types of displays. Particularly, since a phase difference is small in the film according to the present invention, it is suitable for use as a polarizer protective film.

Because the film according to the present invention has high transparency and high heat resistance, it can be used for an IR cut film, a security film, shatterproof film, a decorative film, a metal decorative film, a back sheet for solar cell, a front sheet for flexible solar cell, a shrink film, an in-mold label film, and a film for gas barrier film base material, as applications other than optics applications.

A polarizing plate according to the present invention includes at least one polarizer protective film according to the present invention. Preferably, the polarizing plate is a stack of a polarizer made of a polyvinyl alcohol-based resin and the polarizer protective film according to the present invention with an adhesive layer interposed therebetween.

As shown in Fig. 1, in a polarizing plate according to a preferred embodiment of the present invention, an adhesive layer 12 is laminated on one surface of a polarizer 11, and a polarizer protective film 14 according to the present invention is further laminated on the adhesive layer 12; further, an adhesive layer 15 is laminated on the other surface of the polarizer 11, and an optical film 16 is further laminated on the adhesive layer 15 (see Fig. 1). Although an adhesion enhancement layer 13 may be placed on the surface of the polarizer protective film 14 according to the present invention that is in contact with the adhesive layer 12 (see Fig. 2), the polarizer protective film 14 according to the present invention can suitably maintain high adhesiveness without the adhesion enhancement layer 13. While use of the adhesion enhancement layer 13 is advantageous in that adhesiveness between the adhesive layer 12 and the polarizer protective film 14 becomes higher, it is disadvantageous in productivity and cost.

A polarizer that is made of the above-described polyvinyl alcohol-based resin is obtained by performing dyeing of a polyvinyl alcohol-based resin film with a dichroic material (typically, iodine, dichroic dye) and uniaxial stretching, for example. The polyvinyl alcohol-based resin film can be obtained by forming the polyvinyl alcohol-based resin into a film by an appropriate method (for example, a casting method that form a film by casting of a solution where resin dissolves in water or organic solvent, a cast method, an extrusion method).

In the polyvinyl alcohol-based resin, the degree of polymerization is preferably 100 to 5000 and more preferably 1400 to 4000. Further, the although the thickness of the polyvinyl alcohol-based resin film that is used for the polarizer can be set appropriately according to the purpose or application of an LCD where the polarizing plate is to be used, it is typically 5 to 80 μm.

The adhesive layer that can be used for the polarizing plate according to the present invention is not particularly limited as long as it is optically transparent. As an adhesive to be used for the adhesive layer, water-based adhesive, solvent-based adhesive, hot-melt adhesive, UV curable adhesive or the like may be used. Among them, water-based adhesive and UV curing adhesive is preferred for use.

Although the water-based adhesive is not particularly limited, vinyl polymer-based, gelatin-based, vinyl-based latex-based, polyurethane-based, isocyanate-based, polyester-based, epoxy-based adhesives and the like may be used, for example. Such water-based adhesives may contain a crosslinking agent, another additive, a catalyst such as acid according to need. As the water-based adhesive, use of an adhesive containing vinyl polymer is preferred, and a polyvinyl alcohol-based resin is preferred as vinyl polymer. Further, the polyvinyl alcohol-based resin may contain a water-soluble crosslinking agent such as boric acid, borax, glutaraldehyde, melamine or oxalic acid. Particularly, in the case of using a polyvinyl alcohol-based polymer film as the polarizer, it is preferred to use an adhesive that contains a polyvinyl alcohol-based resin in terms of adhesive properties. Furthermore, an adhesive that contains a polyvinyl alcohol-based resin having an acetoacetyl group is more preferred in terms of improving durability. The above-described water-based adhesive is generally used as an adhesive made of an aqueous solution, and it has a solid content of 0.5 to 60% by weight.

Further, the above-described adhesive may contain a metal compound filler. Use of the metal compound filler enables control of the fluidity of the adhesive layer, and it is possible to stabilize the film thickness, thereby obtain the polarizing plate which has good appearance, is uniform in plane and has no adhesion irregularity.

A method for forming the adhesive layer is not particularly limited. For example, the adhesive layer may be formed by applying the above-described adhesive onto an object and then heating or drying it. The adhesive may be applied onto the polarizer protective film according to the present invention or the optical film, or may be applied onto the polarizer. After forming the adhesive layer, the polarizer protective film or the optical film and the polarizer are pressed against each other, thereby laminating them together. In the lamination, a roll press machine, a flat plate pressing machine or the like may be used. A heating/drying temperature and a drying time are appropriately determined according to the type of adhesive.

The thickness of the adhesive layer is preferably 0.01 to 10 μm and more preferably 0.03 to 5 μm in a dry state.

Adhesion enhancement treatment that can be performed on the polarizing plate according to the present invention enhances adhesion of a plane in which the polarizer protective film and the polarizer are in contact with each other. An example of adhesion enhancement treatment is surface treatment such as corona treatment, plasma treatment and low-pressure UV treatment.

It is also possible to place an adhesion enhancement layer. The adhesion enhancement layer is a silicone layer having a reactive functional group, for example. Although the material of the silicone layer having a reactive functional group is not particularly limited, examples are isocyanate group-containing alkoxy silanols, amino group-containing alkoxy silanols, mercapto group-containing alkoxy silanols, carboxy-containing alkoxy silanols, epoxy group-containing alkoxy silanols, vinyl unsaturated group-containing alkoxy silanols, halogen group-containing alkoxy silanols, isocyanate group-containing alkoxy silanols and the like. Among those materials, amino-based silanol is preferred for use. By adding, to silanol, a titanium-based catalyst or a tin-based catalyst for efficient reaction of silanol, it is possible to strengthen the adhesive force. Further, other additives may be added to the above-described silicone having a reactive functional group. Examples of other additives are tackifiers such as terpene resin, phenol resin, terpene-phenolic resin, rosin resin and xylene resin, an ultraviolet absorber, an antioxidant, a stabilizer such as a heat-resistant stabilizer and the like. Further, as the adhesion enhancement layer, a layer made by saponification of a cellulose acetate butyrate resin may be used.

The above-described adhesion enhancement layer is formed by coating and drying by a known technique. The thickness of the adhesion enhancement layer in a dry state is preferably 1 to 100 nm and more preferably 10 to 50 nm. During coating, a chemical solution for adhesion enhancement layer formation may be diluted with a solvent. Although a diluting solvent is not particularly limited, alcohols may be used, for example. Although a dilute concentration is not particularly limited, it is preferably 1 to 5 mass% and more preferably 1 to 3 mass%.

The optical film 16 may be a polarizer protective film of the present invention or may be another arbitrary optical film that is suitable for use. An optical film to be used is not particularly limited, and a film made of a cellulose resin, a polycarbonate resin, a cyclic polyolefin resin, a methacrylate resin or the like may be used.

The cellulose resin is an ester of cellulose and a fatty acid. Specific examples of such a cellulose ester resin

are cellulose triacetate, cellulose diacetate, cellulose tripropionate, and cellulose dipropionate and the like. Among these, cellulose triacetate is particularly preferred. Many cellulose triacetate products are commercially available, and it is advantageous also in terms of availability and cost. Examples of commercially available cellulose triacetate are "UV-50", "UV-80", "SH-80", "TD-80U", "TD-TAC" and "UZ- TAC " manufactured by FUJIFILM Corporation, "KC series" manufactured by Konica Minolta, Inc. and the like.

The cyclic polyolefin resin is a generic name of resins to be polymerized with a cyclic olefin as a polymerized unit, and the resins disclosed in Japanese Unexamined Patent Application Publications Nos. H1-240517, H3-14882, H3-122137 and the like may be used. Specific examples are cyclic olefin ring-opening (co)polymer, addition polymers of cyclic olefin, cyclic olefin and α-olefin such as ethylene and propylene, and a copolymer of them (typically, random copolymer), a graft polymer produced by denaturing them with unsaturated carboxylic acids or their derivatives, their hydrides and the like. Specific examples of the cyclic olefin are norbornene-based monomers.

As the cyclic polyolefin resin, various products are commercially available. Specific examples are the trade names "ZEONEX" and "ZEONOR" manufactured by Nippon Zeon product name Co., Ltd., the trade name "Arton" manufactured by JSR Corporation, the trade name "TOPAS" manufactured by Polyplastics Co., Ltd., and the trade name "APEL" manufactured by Mitsui Chemicals Co., Ltd..

As the methacrylate resin that is used for producing the optical film 16, other than the film according to the present invention, any appropriate methacrylate resin can be used within a range which does not impair the effects of the present invention. Examples are polymethacrylic acid esters such as polymethylmethacrylate, methyl methacrylate - (meth)acrylic acid copolymer, methyl methacrylate - (meth) acrylic acid ester copolymer, methyl methacrylate - acrylic acid ester - (meth)acrylic acid copolymer, methyl (meth) acrylate - styrene copolymer (MS resin), polymers having an alicyclic hydrocarbon group (e.g., methyl methacrylate - cyclohexyl methacrylate copolymer, a methyl methacrylate - (meth) norbornyl acrylate copolymer and the like.

Specific examples of the methacrylate resin that is used for producing the optical film 16, other than the film according to the present invention, are Acrypet VH and Acrypet VRL20A manufactured by Mitsubishi Rayon Co., Ltd., the acrylate resin produced by copolymerization of methyl methacrylate and a maleimide-based monomer which is disclosed in Japanese Unexamined Patent Application Publication No. 2013-033237 and International Publication Number WO2013/005634, the acrylate resin having a ring structure in molecules which is disclosed in International Publication Number WO2005/108438, the methacrylate resin having a ring structure in molecules which is disclosed in Japanese Unexamined Patent Application Publication No. 2009-197151, the methacrylate resin with a high glass transition temperature (Tg) obtained by intramolecular cross-link or intramolecular cyclization reaction and the like.

As the methacrylate resin that is used for producing the optical film 16, other than the film according to the present invention, a methacrylate resin having a lactone ring structure may be also used. Because it has high heat resistance, high transparency, and high mechanical strength after biaxially stretched.

As the above-described methacrylate resin having a lactone ring structure, the methacrylate resin having a lactone ring structure which is disclosed in Japanese Unexamined Patent Application Publications Nos. 2000-230016. 2001-151814, 2002-120326, 2002-254544, 2005-146084 may be used.

The polarizing plate according to the present invention can be used for an image display device. Specific examples of the image display device are self-luminous display devices such as an electroluminescence (EL) display, a plasma display (PD) and a field emission display (FED: Field Emission Display) and liquid crystal display devices. The liquid crystal display device includes a liquid crystal cell and the above-described polarizing plate that is disposed at least on one side of the liquid crystal cell. At this time, the polarizer protective film according to the present invention is preferably placed at least on the liquid crystal cell side of the polarizing plate.

## Examples

The present invention is described hereinafter in detail by using examples and comparative examples; however, the present invention is not limited to the following examples. Note that physical property values were measured in the following way.

### (Polymerization conversion rate)

Inert CAP 1 (df = 0.4μm, I.D. = 0.25mm, length = 60m) manufactured by GL Sciences Inc. was connected as a column to the gas chromatograph GC-14A manufactured by Shimadzu Corporation, and measurement was performed by setting injection temperature to 180°C, setting a detector temperature to 180°C, raising a column temperature from 60° (kept for 5 minutes) up to 200°C at a temperature increase rate of 10°C/min and then leaving it for 10 minutes, and a polymerization conversion rate was calculated based on those results.

(Weight-average molecular weight (Mw), Number-average molecular weight (Mn), Molecular-weight distribution)

For Mw of the methacrylate resin obtained in each production examples, examples and comparative examples and the polycarbonate resin, Mn of the phenoxy resin and the molecular-weight distribution of each resin, the chromatogram was calculated by gel permeation chromatography (GPC) under the following conditions, and values converted into the molecular weight of standard polystyrene were calculated. A baseline was a line that connects a point at which the slope of a peak on the high molecular side in the GPC chart changes from zero to plus when viewed from the earlier retention time and a point at which the slope of a peak on the low molecular side in the GPC chart changes from minus to zero when viewed from the earlier retention time.

GPS device: HLC-8320 manufactured by Tosoh Corporation
Detector: differential refractive index detector
Column: two of TSKgel SuperMultipor e HZM-M and Super HZ4000 were connected in series.
Eluent: tetrahydrofuran
Eluent flow rate: 0.35ml /min
Column temperature: 40°C
Calibration curve: prepared using data of 10 standard polystyrenes

(Triad syndiotacticity (rr))

The $^1$H-NMR spectrum of a methacrylate resin was measured 64 times in total at room temperature by using a nuclear magnetic resonator (ULTRA SHIELD 400 PLUS manufactured by Bruker Co.) and using deuterated chloroform as a solvent. The area (X) of a region with 0.6 to 0.95 ppm and the area (Y) of a region with 0.6 to 1.35 ppm when TMS was 0ppm were measured from the spectrum, and then the triad syndiotacticity (rr) was calculated by the formula: $(X/Y)\times 100$.

(Glass transition temperature Tg)

For the methacrylate resin, the phenoxy resin, the polycarbonate resin and the methacrylate resin composition, the DSC curve was measured using a differential scanning calorimeter (DSC-50 (part number) manufactured by Shimadzu Corporation) in compliance with JIS K7121 under the conditions that the temperature was raised to 230°C for the first time, then cooled down to a room temperature, and then raised from a room temperature to 230°C at a rate of 10°C/min for the second time. A midpoint glass transition temperature calculated from the DSC curve measured at the second-time temperature rise was set as the glass transition temperature in the present invention.

(Thermogravimetric reduction rate)

A thermogravimetric reduction rate when the methacrylate resin composition was heated to 290°C and left for 30 minutes under the air atmosphere was measured using a thermogravimetric measurement device (TGA-50 manufactured by Shimadzu Corporation), and pyrolysis resistance was evaluated.

(Melt volume flow rate (MFR))

The polycarbonate resin was measured at 300°C and 1.2kg load for 10 minutes in compliance with JIS K7210.

(Strength of unstretched film)

The state where slight tension was applied to the unstretched film obtained in each example and comparative example by holding both ends of the film by hand was evaluated.

A: The film remained unchanged, and the original state was maintained
B: The film was fragile and cracked

(Surface smoothness)

The surface of the unstretched film, the biaxially-stretched film obtained in each example and comparative example was visually observed, and the surface smoothness was evaluated by the following criteria.

A: The surface was smooth
B: The surface was irregular

(Heat shrinkage rate)

A test piece was cut out from the biaxially-stretched film obtained in each example and comparative example, a straight line with a length of 70 mm was drawn on its surface, and then the test piece was heated for 30 minutes in a forced hot-air circulation type thermostatic oven maintained at a temperature of 110°C, and then the length L(mm) of the drawn straight line was measured by a scale, and a heat shrinkage rate was calculated by the following equation;

$$\text{Heat shrinkage rate (\%)} = (70\text{-L})/70\times 100$$

(Total light transmittance)

A test piece was cut out from the biaxially-stretched film obtained in each example and comparative example, and the total light transmittance thereof was measured using a haze meter (HM-150 manufactured by Murakami Color Research Laboratory Ltd.) in compliance with JISK7361-1. For the evaluation of the methacrylate resin composition, a molded article with a thickness of 3.2 mm was formed by heat press, and the total light transmittance was measured in the same manner.

(Haze)

A test piece was cut out from the biaxially-stretched film obtained in each example and comparative example, and the haze thereof was measured using a haze meter (HM-150 manufactured by Murakami Color Research Laboratory Ltd.) in compliance with JISK7136. For the evaluation of the methacrylate resin composition, a molded article with a thickness of 3.2 mm was formed by heat press, and the haze was measured in the same manner.

(Phase difference in thickness direction (Rth))

A test piece of 40mm×40mm was cut out from the biaxially-stretched film obtained in each example and comparative example. In this test piece, three-dimensional refractive indices $n_x$, $n_y$ and $n_z$ were calculated from a phase difference value with a wavelength of 590nm and a slope of 40° at a temperature of 23±2°C and humidity of 50±5%, using an automatic birefringence meter (KOBRA-WR manufactured by Oji Measurement Ltd.), and then a phase difference in the thicknes direction Rth=((nx+ny)/2-nz)×d was calculated. A thickness d(nm) of the test piece was measured using a digimatic indicator (manufactured by Mitutoyo Corporation), and an refractive index n was measured using a digital precision refractometer (KPR-200 manufacrured by Kalnew Optical Industry Co., Ltd.).

(In-plane phase difference (Re))

A test piece of 40mm×40mm was cut out from the biaxially-stretched film obtained in each example and comparative example. In this test piece, the in-plane phase difference Re was measured at a temperature of 23±2°C and humidity of 50±5%, using an automatic birefringence meter (KOBRA-WR manufactured by Oji Measurement Ltd.).

(Stretching properties)

When biaxially-stretching the unstretched film obtained in each example and comparative example, stretching properties were evaluated by the following criteria:

A: Films with no splits or cracks were obtained at a rate of 5 samples or more out of 10 samples
B: Films with no splits or cracks were obtained at a rate of 4 samples or less out of 10 samples

(Adhesive properties)

Adhesiveness between the polarizer protective film and the adhesive layer in the polarizing plate obtained in each example and comparative example was evaluated by the following criteria. In those criteria, the occurrence of material failure in the adhesive layer indicates that adhesiveness between the polarizer protective film and the adhesive

layer is high. The polarizer protective film and the polarizer of the produced polarizing plate were pulled at a rate of 250 mm/minute by an autograph, and 90-degree peel test was conducted. Determination was made by the following criteria.

A: Films where material failure occurred in the adhesive layer were obtained at a rate of 5 samples or more out of 10 samples.
B: Films where material failure occurred in the adhesive layer were obtained at a rate of 4 samples or less out of 10 samples

(Production example 1)

The inside of a 5L glass reaction container with a stirring blade and a three-way cock was substituted with nitrogen. Then, 1600g of toluene, 2.49g (10.8mmol) of 1,1,4,7,10,10-hexamethyltriethylenetetramine, 53.5g (30.9mmol) of toluene solution containing isobutylbis (2,6-di-t-butyl-4-methylphenoxy) aluminum with a concentration of 0.45M, and 6.17g (10.3mmol) of a solution (solvent: 95 mass% of cyclohexane, 5 mass% of n-hexane) containing sec-butyllithium with a concentration of 1.3M were incorporated thereinto at room temperature. After that, 550g of methyl methacrylate purified by distillation fall in drops at -20°C for 30 minutes while being agitated. After dropping, it was stirred for 180 minutes at -20°C. The color of the solution changed from yellow to colorless. A conversion rate of methyl methacrylate at this time was 100%.

1500g of toluene was added to the obtained solution and diluted. After that, the diluted solution was poured into 100kg of methanol to obtain a precipitate. The obtained precipitate was dried at 80°C and 140Pa for 24 hours, and consequently the methacrylate resin [PMMA1] with Mw of 96100, molecular weight distribution of 1.07, syndiotacticity (rr) of 83%, glass transition temperature of 133°C and a proportion of structural units originating from methyl methacrylate of 100 mass% was obtained.

(Production example 2)

The inside of a 5L glass reaction container with a stirring blade and a three-way cock was substituted with nitrogen. Then, 1600g of toluene, 2.49g (10.8mmol) of 1,1,4,7,10,10-hexamethyltriethylenetetramine, 53.5g (30.9mmol) of toluene solution containing isobutylbis (2,6-di-t-butyl-4-methylphenoxy) aluminum with a concentration of 0.45M, and 6.17g (10.3mmol) of a solution (solvent: 95% of cyclohexane, 5% of n-hexane) containing sec-butyllithium with a concentration of 1.3M were incorporated thereinto at room temperature. After that, 550g of methyl methacrylate purified by distillation fall in drops at 20°C for 30 minutes while being agitated. After dropping, it was stirred for 90 minutes at 20°C. The color of the solution changed from yellow to colorless. A polarization conversion rate of methyl methacrylate at this time was 100%.

1500g of toluene was added to the obtained solution and diluted. After that, the diluted solution was poured into 100kg of methanol to obtain a precipitate. The obtained precipitate was dried at 80°C and 140Pa for 24 hours, and consequently the methacrylate resin [PMMA2] with Mw of 81400, molecular weight distribution of 1.08, syndiotacticity (rr) of 73%, glass transition temperature of 131°C and a content of structural units originating from methyl methacrylate of 100 mass% was obtained.

(Production example 3)

The inside of an autoclave with a stirring blade and a sampling tube was substituted with nitrogen. Then, 100 parts by mass of purified methyl methacrylate, 0.0052 parts by mass of 2,2'-azobis (2-methyl-propionitrile (hydrogen abstraction ability: 1%, 1-hour half-life temperature: 83°C), and 0.225 parts by mass of n-octyl mercaptan were entered into it and stirred to obtain a raw material liquid. Nitrogen was fed to the raw material liquid to remove dissolved oxygen in the raw material liquid.

The raw material liquid was added to two-thirds of the capacity of a vessel type reactor connected to the autoclave through a pipe. Maintaining the temperature at 140°C, polymerization reaction was initiated in a batch manner first. When the polarization conversion rate reached 55 mass%, the raw material liquid was supplied from the autoclave to the vessel type reactor at a flow rate with an average residence time of 150 minutes, and the reaction solution was extracted from the vessel type reactor at a flow rate corresponding to the supply flow rate of the raw material liquid, and then the polymerization reaction was switched to continuous flow reaction, maintaining the temperature at 140°C. After switching, the polarization conversion rate in the steady state was 55 mass%.

The reaction solution to be poured out of the vessel type reactor in the steady state was supplied to a multitubular heat exchanger with an internal temperature of 230°C at a flow rate with an average residence time of 2 minutes and warmed. Then, the warmed reaction mixture was introduced into a flash evaporator to remove volatile matter composed mainly of unreacted monomers, to obtain a molten resin. The resin from which volatile matter was removed was supplied

to a twin screw extruder with an internal temperature of 260°C and discharged in a strand form, then cut with a pelletizer, and thereby methacrylate resin [PMMA3] in the form of pellets with Mw of 103600, molecular weight distribution of 1.81, syndiotacticity (rr) of 52%, glass transition temperature of 120°C and a content of structural units originating from methyl methacrylate of 100 mass% was obtained.

(Production example 4)

57 parts by mass of methacrylate resin [PMMA2] and 43 parts by mass of methacrylate resin [PMMA3] were combined, and then kneaded and extruded at 250°C by a twin screw extruder (trade name: KZW2 0TW-45MG-NH-600, manufactured by TECHNOVEL Corporation), and thereby methacrylate resin [PMMA4] was produced.

SUMIPEX MHF (manufactured by Sumitomo Chemical Co., Ltd.) was used as methacrylate resin [PMMA5].

Poly(N-cyclohexyl maleimide-co-methyl methacrylate) of LG PMMA IH830HR (manufactured by LG MMA Corporation) was used as methacrylate resin [PMMA6].

Table 1 shows the physical properties of the above-described [PMMA1] to [PMMA6].

Table 1

| Methacrylate resin | PMMA1 | PMMA2 | PMMA3 | PMMA4 | PMMA5 | PMMA6 |
|---|---|---|---|---|---|---|
| MMA unit [wt%] | 100 | 100 | 100 | 100 | 98.7 | 93.5 |
| Weight-average molecular weight [g/mol] | 96,100 | 81,400 | 103,600 | 88,600 | 86,600 | 97,000 |
| Molecular weight distribution | 1.07 | 1.08 | 1.81 | 1.32 | 1.78 | 2.11 |
| rr [%] | 83 | 73 | 52 | 62 | 46 | 57 |
| Glass transition temperature [°C] | 133 | 131 | 120 | 126 | 116 | 125 |

The phenoxy resins used are shown below, and the physical properties are shown in Table 2.

Phenoxyl: YP-50S (product number), manufactured by Nippon Steel & Sumikin Chemical Co., Ltd.
Phenoxy2 : YP-50 (product number), manufactured by Nippon Steel & Sumikin Chemical Co., Ltd.
Phenoxy3 : PKFE (product number), manufactured by International Chemical Industries, Inc.

Table 2

| Phenoxy resin | Phenoxy1 | Phenoxy2 | Phenoxy3 |
|---|---|---|---|
| Number-average molecular weight [g/mol] | 22,000 | 19,600 | 16,000 |
| Molecular weight distribution | 2.5 | 4.64 | 3.75 |
| Glass transition temperature [°C] | 95.6 | 95.6 | 98 |

The polycarbonate resins used are shown below, and the physical properties are shown in Table 3.

PC1: Calibre 301-40 (product number), MVR (300° C., 1.2 Kg)=40 $cm^3$/10 min, manufactured by Sumika Styron Polycarbonate Limited
PC2: Iupilon HL-4000 (product number), MVR (300° C., 1.2 Kg)=60 $cm^3$/10 min, manufactured by Mitsubishi Engineering-Plastics Corporation
PC3: SD POLYCA TR-2001 (product number), MVR (300° C., 1.2 Kg)=200 $cm^3$/10 min, manufactured by Sumika Styron Polycarbonate Limited
PC4: SD POLYCA SD-2201 W (product number), MVR (300° C., 1.2 Kg)=115 $cm^3$/10 min, manufactured by Sumika Styron Polycarbonate Limited

Table 3

| Polycarbonate resin | PC1 | PC2 | PC3 | PC4 |
|---|---|---|---|---|
| MVR | 40 | 60 | 200 | 115 |

(continued)

| Polycarbonate resin | PC1 | PC2 | PC3 | PC4 |
|---|---|---|---|---|
| Weight-average molecular weight [g/mol] | 33,300 | 28,100 | 22,100 | 27,200 |
| Molecular weight distribution | 1.91 | 1.91 | 1.81 | 1.9 |
| Viscosity-average molecular weight | 16,200 | 15,100 | 11,400 | 13,000 |
| Glass transition temperature [°C] | 148 | 145 | 141 | 144 |

The polymeric processing aids used are shown below. MMA refers to a structural unit originating from methyl methacrylate, and BA refers to a structural unit originating from butyl acrylate.

B1: Metablen P550A (average degree of polymerization: 7734, MMA88 mass% / BA12 mass%), manufactured by Mitsubishi Rayon Co., Ltd.
B2: Paraloid K125P (average degree of polymerization: 19874, MMA79 mass% / BA21 mass%), manufactured by Kureha Corporation

As the ultraviolet absorber, 2,4,6-tris (2-hydroxy-4-hexyloxy-3-methylphenyl) -1,3,5-triazine (LA-F70, manufactured by ADEKA Corporation) was used.

<Example 1>

100 parts by mass of methacrylate resin [PMMA4], 2.8 parts by mass of phenoxy resin [Phenoxy1], 1 part by mass of polycarbonate resin [PC1], and 2.1 parts by mass of processing aid [B1] were combined, and then kneaded and extruded at 250°C by a twin screw extruder (trade name: KZW2 0TW-45MG-NH-600, manufactured by TECHNOVEL Corporation), and thereby a methacrylate resin composition [1] was produced. The obtained methacrylate resin composition [1] was molded by heat press into a plate-like molded article of 50mm×50mm×3.2mm, and the total light transmittance, the haze, and the glass transition temperature were measured. Further, the thermogravimetric reduction rate of the methacrylate resin composition [1] was measured. The physical properties of the methacrylate resin composition [1] are shown in Table 4.

The methacrylate resin composition [1] was dried at 80°C for 12 hours. Using a 20mmφ single screw extruder (manufactured by OCS, Inc.), at a resin temperature of 260°C, the methacrylate resin composition [1] was extruded from a T-die of 150 mm in width, it was taken off by a roll with a surface temperature of 85°C, and thereby an unstretched film with a width of 110 mm and a thickness of 160 μm was obtained. The evaluation results of surface smoothness and strength of the produced unstretched film are shown in Table 4.

The unstretched film obtained by the above technique was cut into pieces of 100 mm × 100 mm, sequentially biaxially stretched at a stretching temperature of a glass transition temperature +10°C, a stretching rate of 1000 %/min in one direction, and a stretching factor of 200% (4 times in area ratio) for 10 seconds by a pantograph type biaxial stretching tester (manufactured by Toyo Seiki Seisaku-Sho, Ltd.), and then rapidly cooled down by bringing it to room temperature, and thereby a biaxially-stretched film with a thickness of 40 μm was obtained. The measurement results of surface smoothness, heat shrinkage rate, total light transmittance, haze, stretching properties and phase differences (Re, Rth) of the obtained biaxially-stretched film are shown in Table 4.

<Examples 2 to 10, Comparative examples 1 to 9>

Methacrylate resin compositions [2] to [19] were produced by the same method as in the example 1 except that the composition was varied as shown in Tables 4 and 5, and measured. The physical properties of the methacrylate resin compositions [2] to [19] are shown in Tables 4 and 5.

Unstretched films and biaxially-stretched films were obtained in the same method as in the example 1 except that the methacrylate resin compositions [2] to [19] were used instead of the methacrylate resin composition [1]. The evaluation results are also shown in Tables 4 and 5.

<Production of polarizer and adhesive used for evaluation of adhesion properties>

A polyvinyl alcohol film with an average polymerization degree of 2400, a saponification degree of 99.9 mol% and a thickness of 75 μm was immersed in a worm water at 30°C for 60 seconds to be swollen. Then, it was dyed in a 0.3 wt% (weight ratio of iodine/ potassium iodide=0.5/8) of iodine solution at 30°C for 1 minute, and thereby stretched

to 3.5 times. Then, it was immersed in a 4 wt% of boric-acid solution at 65°C for 0.5 minute, and thereby stretched to 6 times in total. After stretching, it was dried for 3 minutes by an oven at 70°C, and thereby a polarizer with a thickness of 22 μm was obtained.

38.3 parts by mass of N-hydroxyethyl acrylamide (Kohjin Co., Ltd.), 19.1 parts by mass of tripropylene glycol diacrylate (trade name: Aronix M-220, manufactured by Toagosei Co., Ltd.), 38.3 parts by mass of acryloyl morpholine (Kohjin Co., Ltd.), and 1.4 parts by mass of photopolymerization initiator (trade name: KAYACURE DETX-S, diethyl thioxanthone, manufactured by Nippon Kayaku Co., Ltd.) were mixed and stirred at 50°C for 1 hour, and thereby an active energy ray curable adhesive was obtained.

Corona discharge treatment was performed on the biaxially-stretched film (which is referred to as "film a") that is obtained in the examples and comparative examples. The above-described active energy ray curable adhesive was applied onto the corona-treated surface of the film a so that the thickness after drying became 500 nm, thereby forming the adhesive layer.

In order to evaluate the adhesion strength, the film a was superimposed on one side of the polarizer, with the adhesive layer facing the polarizer, by using a compact laminating machine. It was then warmed to 50°C from both sides by using an IR heater, and ultraviolet light with irradiation of 1000mJ/cm$^2$ was applied to both sides to cure the active energy ray curable adhesive, thereby obtaining a polarizer where the film a was laminated on one side of the polarizer.

The obtained polarizing plate was cut out into pieces of 100 mm × 10 mm, and adhesion properties were evaluated. The results are shown in Tables 4 and 5.

Table 4

| | Example | | | | | | | | | |
|---|---|---|---|---|---|---|---|---|---|---|
| | 1 | 2 | 3 | 4 | 5 | 6 | 7 | 8 | 9 | 10 |
| Methacrylate resin composition | [1] | [2] | [3] | [4] | [5] | [6] | [7] | [8] | [9] | [10] |
| PMMA1 [parts by mass] | | | | | | | | | 100 | |
| PMMA2 [parts by mass] | | | | | | | | 100 | | |
| PMMA3 [parts by mass] | | | | | | | | | | |
| PMMA4 [parts by mass] | 100 | 100 | 100 | 100 | 100 | 100 | 100 | | | 100 |
| PMMA5 [parts by mass] | | | | | | | | | | |
| PMMA6 [parts by mass] | | | | | | | | | | |
| Phenoxy 1 [parts by mass] | 2.8 | 1.9 | 2.8 | 1.5 | 4.2 | 4.2 | | 4.2 | 4.2 | 1.3 |
| Phenoxy2 [parts by mass] | | | | | | | 4.2 | | | |
| Phenoxy3 [parts by mass] | | | | | | | | | | |
| PC1 [parts by mass] | 1.0 | 1.6 | 1.0 | 1.0 | 1.1 | | | | | |
| PC2 [parts by mass] | | | | | | | | | | |
| PC3 [parts by mass] | | | | | | | | | | |
| PC4 [parts by mass] | | | | | | | | | | |
| Processing aid B1 [parts by mass] | 2.1 | | | 2.1 | 2.1 | | | | | 2.1 |
| Processing aid B2 [parts by mass] | | | | | | | | | | |

(continued)

| | Example | | | | | | | | | |
|---|---|---|---|---|---|---|---|---|---|---|
| | 1 | 2 | 3 | 4 | 5 | 6 | 7 | 8 | 9 | 10 |
| UV absorber [parts by mass] | 0.1 | | | 0.1 | 0.1 | | | | | 0.9 |
| Methacrylate resin composition evaluation result | | | | | | | | | | |
| Total light transmittance [%] | 92 | 92 | 92 | 92 | 92 | 92 | 92 | 92 | 92 | 92 |
| Haze [%] | 0.2 | 0.2 | 0.2 | 0.3 | 0.3 | 0.3 | 0.3 | 0.3 | 0.3 | 0.3 |
| Thermogravimetric reduction rate [%] | 10 | 13 | 10 | 15 | 6 | 6 | 6 | 6 | 6 | 15 |
| Glass transition temperature [°C] | 124 | 125 | 124 | 124 | 123 | 123 | 123 | 128 | 130 | 123 |
| Unstretched film evaluation result | | | | | | | | | | |
| Strength | A | A | A | A | A | A | A | A | A | A |
| Surface smoothness | A | A | A | A | A | A | A | B | B | B |
| Biaxially-stretched film evaluation result | | | | | | | | | | |
| Stretched film thickness [μm] | 40 | 40 | 40 | 40 | 40 | 40 | 40 | 40 | 40 | 40 |
| Surface smoothness | A | A | A | A | A | A | A | B | B | A |
| Heat shrinkage rate [%] | 1.0 | 0.9 | 1.1 | 1.1 | 1.5 | 1.6 | 1.7 | 0.8 | 0.6 | 1.2 |
| Rth [nm] | 0.4 | 0.6 | 0.4 | -5.5 | 6.6 | 4.2 | 4.2 | 4.4 | 4.4 | -12.0 |
| Re [nm] | 0.2 | 0.2 | 0.2 | 0.4 | 0.5 | 0.4 | 0.5 | 0.5 | 0.4 | 0.4 |
| Total light transmittance [%] | 92 | 92 | 92 | 92 | 92 | 92 | 92 | 92 | 92 | 92 |
| Haze [%] | 0.1 | 0.1 | 0.1 | 0.2 | 0.2 | 0.2 | 0.2 | 0.2 | 0.2 | 0.2 |
| Stretching properties | A | A | A | A | A | A | A | B | B | A |
| Stretching temperature | Tg+ 10 | Tg+ 10 | Tg+ 10 | Tg+ 10 | Tg+ 10 | Tg+10 | Tg+10 | Tg+10 | Tg+10 | Tg+10 |
| Adhesion properties | A | A | A | A | A | A | A | A | A | A |

Table 5

| | Comparative example | | | | | | | | |
|---|---|---|---|---|---|---|---|---|---|
| | 1 | 2 | 3 | 4 | 5 | 6 | 7 | 8 | 9 |
| Methacrylate resin composition | [11] | [12] | [13] | [14] | [15] | [16] | [17] | [18] | [19] |
| PMMA1 [parts by mass] | | | | | | | | | |

(continued)

| | | | | | | | | | |
|---|---|---|---|---|---|---|---|---|---|
| PMMA2 [parts by mass] | | | 100 | | | | | | |
| PMMA3 [parts by mass] | | | | 100 | 100 | | | | |
| PMMA4 [parts by mass] | 100 | 100 | | | | 100 | | | |
| PMMA5 [parts by mass] | | | | | | | 100 | | |
| PMMA6 [parts by mass] | | | | | | | | 100 | 100 |
| Phenoxy 1 [parts by mass] | 33.3 | 100 | | | 4.2 | | | | |
| Phenoxy2 [parts by mass] | | | | | | | | | |
| Phenoxy3 [parts by mass] | | | | | | | | 2 | 5 |
| PC1 [parts by mass] | | | | | | | | | |
| PC2 [parts by mass] | | | | | | | | | |
| PC3 [parts by mass] | | | | | | 2.8 | | | |
| PC4 [parts by mass] | | | | | | | 3.1 | | |
| Processing aid B1 [parts by mass] | | | | | | | | | |
| Processing aid B2 [parts by mass] | | | | 2 | | 2 | | | |
| UV absorber [parts by mass] | | | | | | | | | |
| Methacrylate resin composition evaluation result | | | | | | | | | |
| Total light transmittance [%] | 91 | 90 | 92 | 92 | 92 | 92 | 92 | 92 | 92 |
| Haze [%] | 0.4 | 1.5 | 0.2 | 0.2 | 0.3 | 0.2 | 0.3 | 0.2 | 0.3 |
| Thermogravimetric reduction rate [%] | 4 | 2 | 71 | 57 | 5 | 65 | 61 | 14 | 5 |
| Glass transition temperature [°C] | 118 | 106 | 131 | 120 | 116 | 125 | 116 | 124 | 122 |
| Unstretched film evaluation result | | | | | | | | | |
| Strength | A | A | A | A | A | A | A | B | B |
| Surface smoothness | A | A | B | A | A | A | A | B | B |
| Biaxially-stretched film evaluation result | | | | | | | | | |
| Stretched film thickness [$\mu$m] | 40 | 40 | 40 | 40 | 40 | 40 | 40 | 40 | 40 |

(continued)

| | | | | | | | | | |
|---|---|---|---|---|---|---|---|---|---|
| Surface smoothness | A | A | B | A | A | A | A | B | B |
| Heat shrinkage rate [%] | 3.5 | 7.0 | 0.4 | 2.8 | 4.0 | 0.9 | 4.1 | 1.0 | 2.2 |
| Rth [nm] | 136.0 | 284.2 | -15.8 | -15.4 | 4.4 | 0.9 | 4.3 | -10.2 | 5.6 |
| Re [nm] | 4.0 | 4.4 | 0.7 | -0.6 | 0.5 | 2.3 | 0.3 | -1.0 | 0.4 |
| Total light transmittance [%] | 91 | 90 | 92 | 92 | 92 | 92 | 92 | 92 | 92 |
| Haze [%] | 0.2 | 0.4 | 0.1 | 0.1 | 0.1 | 0.1 | 0.1 | 0.1 | 0.1 |
| Stretching properties | A | A | B | B | A | A | B | B | B |
| Stretching temperature | Tg+ 10 | Tg+ 10 | Tg+ 10 | Tg+ 10 | Tg+ 10 | Tg+ 10 | Tg+ 10 | Tg+ 10 | Tg+ 10 |
| Adhesion properties | A | A | B | B | A | B | B | A | A |

The examples and comparative examples show that, because of using the methacrylate resin with a triad syndiotacticity (rr) of 58% or more and the phenoxy resin, the transparency of a methacrylate resin composition and a film to be obtained is high, adhesion properties are good, and phase differences in the thickness direction are small.

Further, by containing methacrylate resin where the triad syndiotacticity (rr) is between 58% to 72%, the weight-average molecular weight is 60000 to 200000, and the content of structural units originating from methacrylate resin is 92 mass% or more, the heat resistance is higher to be highly resistant to shrinkage and further the stretching properties become better.

Further, because the film according to the present invention has good stretching properties, it is possible to obtain a thinner film of 40 μm or less by stretching. Furthermore, because a polarizing plate to be produced has good adhesion properties, it is suitable for preparing a polarizing plate that is not likely to peel off and has high durability.

This application is based upon and claims the benefit of priority from Japanese patent application No. 2014-231756, filed on November 14, 2014, the disclosure of which is incorporated herein in its entirety by reference.

**Reference Signs List**

11 POLARIZER
12 ADHESIVE LAYER
13 ADHESIVE ENHANCEMENT LAYER
14 POLARIZER PROTECTIVE FILM
15 ADHESIVE LAYER
16 OPTICAL FILM

## Claims

**1.** A methacrylate resin composition containing a methacrylate resin with a triad syndiotacticity (rr) of equal to or more than 58% calculated from the formula: $(X/Y) \times 100$ by measuring $^1$H-NMR spectrum at 30°C in deuterated chloroform and measuring, from the spectrum, an area (X) of a region with 0.6 to 0.95 ppm and an area (Y) of a region with 0.6 to 1.35 ppm where tetramethylsilane is 0 ppm, a phenoxy resin, and a polycarbonate resin,
wherein content of the phenoxy resin per 100 parts by mass of the methacrylate resin is within a range of 0.1 to 8 parts by mass, and total content of the methacrylate resin and the phenoxy resin is equal to or more than 80 mass%,
wherein in the methacrylate resin, content of at least one structural unit selected from a group consisting of a lactone ring unit, a maleic anhydride unit, a glutaric acid anhydride unit, a glutarimide unit, an N-substituted maleimide unit, and a tetrahydropyran ring structure unit is equal to or less than 0.1 mass%,
wherein content of the polycarbonate resin per 100 parts by mass of the methacrylate resin is within a range of 0.1 to 8 parts by mass.

2. The methacrylate resin composition according to Claim 1, wherein
the methacrylate resin has a weight-average molecular weight of 60000 to 200000 obtained by converting a chromatogram measured by gel permeation chromatography into a molecular weight of standard polystyrene, and content of structural units originating from methyl methacrylate is equal to or more than 92 mass%.

3. The methacrylate resin composition according to Claim 1 or 2, wherein
in the methacrylate resin, content of structural units originating from methyl methacrylate is equal to or more than 99 mass%.

4. The methacrylate resin composition according to any one of Claims 1 to 3, wherein
a number-average molecular weight of the phenoxy resin is 10000 to 50000 obtained by converting a chromatogram measured by gel permeation chromatography into a molecular weight of standard polystyrene.

5. The methacrylate resin composition according to any one of Claims 1 to 4, wherein
a weight-average molecular weight of the polycarbonate resin is 15000 to 28000 obtained by converting a chromatogram measured by gel permeation chromatography into a molecular weight of standard polystyrene.

6. A molded article consisting of the methacrylate resin composition according to any one of Claims 1 to 5.

7. A film consisting of the methacrylate resin composition according to any one of Claims 1 to 5.

8. The film according to Claim 7, wherein a thickness is 10 to 50 μm.

9. The film according to Claim 7 or 8, wherein the film is uniaxially stretched or biaxially stretched to 1.5 to 8 times in area ratio.

10. A polarizer protective film or a phase difference film consisting of the film according to any one of Claims 7 to 9.

11. A polarizing plate wherein at least one of the polarizer protective film or the phase difference film according to Claim 10 is laminated.

**Patentansprüche**

1. Methacrylatharzzusammensetzung enthaltend ein Methacrylatharz mit einer Triadensyndiotaktizität (rr) von gleich oder mehr als 58%, berechnet aus der Formel: $(X/Y)\times 100$ durch Messen des $^1$H-NMR-Spektrums bei 30°C in deuteriertem Chloroform und Messen, aus dem Spektrum, einer Fläche (X) eines Bereichs mit 0,6 bis 0,95 ppm und einer Fläche (Y) eines Bereichs mit 0,6 bis 1,35 ppm, wobei Tetramethylsilan bei 0 ppm liegt, ein Phenoxyharz und ein Polycarbonatharz,
wobei der Gehalt des Phenoxyharzes pro 100 Massenteilen des Methacrylatharzes in einem Bereich von 0,1 bis 8 Massenteilen liegt, und der Gesamtgehalt des Methacrylatharzes und des Phenoxyharzes gleich oder mehr als 80 Massen-% beträgt,
wobei in dem Methacrylatharz der Gehalt von mindestens einer Struktureinheit, ausgewählt aus einer Gruppe, bestehend aus einer Laktonringeinheit, einer Maleinsäureanhydrideinheit, einer Glutarsäureanhydrideinheit, einer Glutarimideinheit, einer N-substituierten Maleimideinheit und einer Tetrahydropyranringstruktureinheit, gleich oder weniger als 0,1 Massen-% beträgt,
wobei der Gehalt des Polycarbonatharzes pro 100 Massenteilen des Methacrylatharzes in einem Bereich von 0,1 bis 8 Massenteilen liegt.

2. Methacrylatharzzusammensetzung nach Anspruch 1, wobei
das Methacrylatharz ein gewichtsgemitteltes Molekulargewicht von 60000 bis 200000, das durch Umwandlung eines Chromatogramms, gemessen durch Gelpermeationschromatographie, in ein Molekulargewicht von Standard-Polystyrol erhalten wird, und einen Gehalt von Struktureinheiten, die von Methylmethacrylat stammen, aufweist, der gleich oder mehr als 92 Massen-% beträgt.

3. Methacrylatharzzusammensetzung nach Anspruch 1 oder 2, wobei
in dem Methacrylatharz der Gehalt von Struktureinheiten, die von Methylmethacrylat stammen, gleich oder mehr als 99 Massen-% beträgt.

4. Methacrylatharzzusammensetzung nach einem der Ansprüche 1 bis 3, wobei ein zahlengemitteltes Molekulargewicht des Phenoxyharzes, das durch Umwandlung eines Chromatogramms, gemessen durch Gelpermeationschromatographie, in ein Molekulargewicht von Standard-Polystyrol erhalten wird, 10000 bis 50000 beträgt.

5. Methacrylatharzzusammensetzung nach einem der Ansprüche 1 bis 4, wobei ein gewichtsgemitteltes Molekulargewicht des Polycarbonatharzes, das durch Umwandlung eines Chromatogramms, gemessen durch Gelpermeationschromatographie, in ein Molekulargewicht von Standard-Polystyrol erhalten wird, 15000 bis 25000 beträgt.

6. Geformter Gegenstand bestehend aus der Methacrylatharzzusammensetzung nach einem der Ansprüche 1 bis 5.

7. Folie bestehend aus der Methacrylatharzzusammensetzung nach einem der Ansprüche 1 bis 5.

8. Folie nach Anspruch 7, wobei die Dicke 10 bis 50 $\mu$m beträgt.

9. Folie nach Anspruch 7 oder 8, wobei die Folie monoaxial oder biaxial auf das 1,5- bis 8-fache des Flächenverhältnisses gestreckt ist.

10. Polarisatorschutzfolie oder Phasendifferenzfolie bestehend aus der Folie nach einem der Ansprüche 7 bis 9.

11. Polarisationsplatte, wobei mindestens eine der Polarisatorschutzfolie oder der Phasendifferenzfolie nach Anspruch 10 laminiert ist.

**Revendications**

1. Composition de résine de méthacrylate contenant une résine de méthacrylate avec une triade syndiotactique (rr) supérieure ou égale à 58 % calculée à partir de la formule : (X/Y)x100 en mesurant le spectre RMN-$^1$H à 30°C dans du chloroforme deutérié et mesurant, à partir du spectre, une zone (X) d'une région avec 0,6 à 0,95 ppm et une zone (Y) d'une région avec 0,6 à 1,35 ppm où du tétraméthylsilane est 0 ppm, une résine phénoxy et une résine de polycarbonate, dans laquelle la teneur en la résine phénoxy par 100 parties en masse de la résine de méthacrylate est au sein d'une plage de 0,1 à 8 parties en masse, et la teneur totale en la résine de méthacrylate et la résine phénoxy est supérieure ou égale à 80 % en masse,
dans laquelle dans la résine de méthacrylate, la teneur en au moins une unité structurelle sélectionnée parmi un groupe constitué d'une unité de cycle de lactone, d'une unité d'anhydride maléique, d'une unité d'anhydride d'acide glutarique, d'une unité de glutarimide, d'une unité de maléimide N-substitué et d'une unité structurelle de cycle de tétrahydropyrane est inférieure ou égale à 0,1 % en masse,
dans laquelle la teneur en la résine de polycarbonate par 100 parties en masse de la résine de méthacrylate est au sein d'une plage de 0,1 à 8 parties en masse.

2. Composition de résine de méthacrylate selon la revendication 1, dans laquelle la résine de méthacrylate a un poids moléculaire moyen en poids de 60 000 à 200 000 obtenu en convertissant un chromatogramme mesuré par chromatographie par perméation de gel en un poids moléculaire de polystyrène standard, et la teneur en unités structurelles provenant du méthacrylate de méthyle est supérieure ou égale à 92 % en masse.

3. Composition de résine de méthacrylate selon la revendication 1 ou 2, dans laquelle
dans la résine de méthacrylate, la teneur en unités structurelles provenant du méthacrylate de méthyle est supérieure ou égale à 99 % en masse.

4. Composition de résine de méthacrylate selon l'une quelconque des revendications 1 à 3, dans laquelle
un poids moléculaire moyen en nombre de la résine phénoxy est de 10 000 à 50 000 obtenu en convertissant un chromatogramme mesuré par chromatographie par perméation de gel en un poids moléculaire de polystyrène standard.

5. Composition de résine de méthacrylate selon l'une quelconque des revendications 1 à 4, dans laquelle
un poids moléculaire moyen en poids de la résine de polycarbonate est de 15 000 à 28 000 obtenu en convertissant un chromatogramme mesuré par chromatographie par perméation de gel en un poids moléculaire de polystyrène standard.

6. Article moulé constitué de la composition de résine de méthacrylate selon l'une quelconque des revendications 1 à 5.

7. Film constitué de la composition de résine de méthacrylate selon l'une quelconque des revendications 1 à 5.

8. Film selon la revendication 7, dans lequel une épaisseur va de 10 à 50 $\mu$m.

9. Film selon la revendication 7 ou 8, dans lequel le film est étiré de manière uniaxiale ou étiré de manière biaxiale à 1,5 à 8 fois en rapport de section.

10. Film protecteur polarisant ou film à différence de phase constitué du film selon l'une quelconque des revendications 7 à 9.

11. Plaque polarisante, dans laquelle au moins un du film protecteur polarisant ou du film à différence de phase selon la revendication 10 est stratifié.

Fig. 1

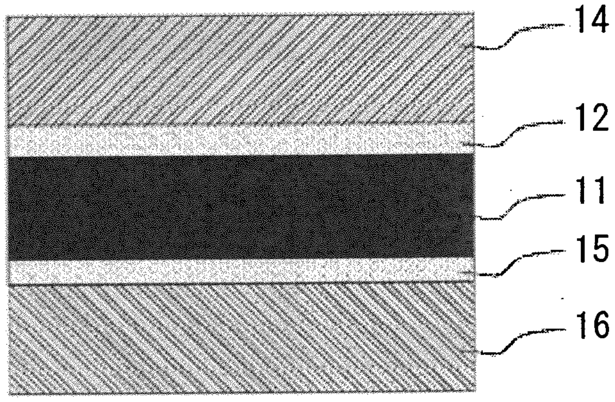


Fig. 2

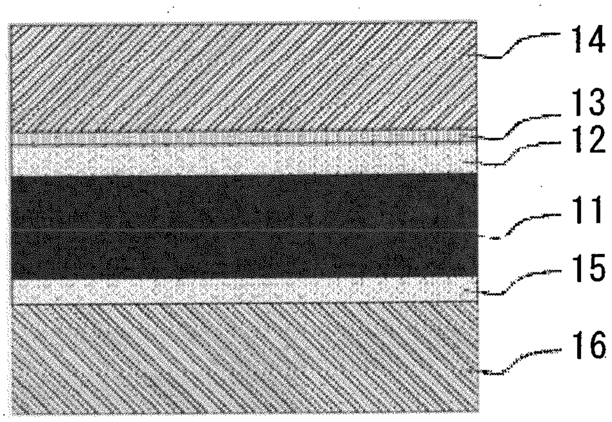

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S5732942 B
- JP 2014051649 A
- WO 2009088240 A
- JP 5220129 B
- WO 2009088237 A
- JP 5312479 B
- WO 2009134097 A
- JP 5335070 B
- EP 3127681 A1
- US 2009012267 A1
- US 2009197020 A1
- US 5656704 A
- JP 2001026706 A
- WO 2011089794 A1
- WO 2012124395 A1
- JP 2012012476 A
- JP 2013023461 A
- JP 2013112790 A
- JP 2013194037 A
- JP 2014062228 A
- JP 2014088542 A
- JP 2014088543 A
- JP H1240517 B
- JP H314882 B
- JP H3122137 B
- JP 2013033237 A
- WO 2013005634 A
- WO 2005108438 A
- JP 2009197151 A
- JP 2000230016 A
- JP 2001151814 A
- JP 2002120326 A
- JP 2002254544 A
- JP 2005146084 A
- JP 2014231756 A


### Non-patent literature cited in the description


- **HSU, W.P. et al.** MISCIBLE BLENDS OF STEREOREGULAR POLY(METHYL METHACRYLATE) AND POLY(HYDROXY ETHER OF BISPHENOL A). *POLYMER JOURNAL,* 01 January 2000, vol. 32 (2), 127-132